# EUROPEAN PATENT SPECIFICATION

(11) **EP 4 458 642 B1**
(45) Date of publication and mention of the grant of the patent: **18.11.2026**
(21) Application number: 22939809.4
(22) Date of filing: 20.10.2022
(51) Int. Cl.: B61F 5/50, B61C 9/50, F16H 55/17, B61C 11/04

(54) **BOGIE AND RACK VEHICLE**
DREHGESTELL UND ZAHNRADFAHRZEUG
BOGIE ET VÉHICULE À CRÉMAILLÈRE

(30) Priority: 29.04.2022 CN 202210474938; 11.05.2022 CN 202210514231; 11.05.2022 CN 202210514234
(43) Date of publication of application: 06.11.2024
(73) Proprietor: CRRC Qingdao Sifang Co., Ltd., Qingdao, Shandong 266111 (CN)
(72) Inventor: ZHANG, Zhenxian, Qingdao, Shandong 266111 (CN); ZHANG, Huijie, Qingdao, Shandong 266111 (CN); ZHOU, Jinming, Qingdao, Shandong 266111 (CN); MIAO, Chenglin, Qingdao, Shandong 266111 (CN); LIU, Wei, Qingdao, Shandong 266111 (CN); QIN, Qingbin, Qingdao, Shandong 266111 (CN); MEN, Jianqiang, Qingdao, Shandong 266111 (CN); PAN, He, Qingdao, Shandong 266111 (CN); LI, Tianyi, Qingdao, Shandong 266111 (CN); HOU, Jianwen, Qingdao, Shandong 266111 (CN); CHANG, Zhen, Qingdao, Shandong 266111 (CN); ZHANG, Xueping, Qingdao, Shandong 266111 (CN)
(74) Representative: Dilg, Haeusler, Schindelmann Patentanwaltsgesellschaft mbH
(86) International application number: PCT/CN2022/126363
(87) International publication number: WO 2023/206989

(56) References cited:
- CH-A5- 674 633
- CN-A- 110 450 811
- CN-A- 111 762 210
- CN-A- 114 312 128
- CN-A- 114 368 407
- CN-A- 114 701 535
- CN-A- 114 754 123
- DE-A1- 2 827 112
- DE-B- 1 240 914

## Description

### CROSS-REFERENCE TO RELATED APPLICATION

The present application claims priorities to Chinese patent application No. 202210474938.1 filed on April 29, 2022, entitled "Bogie, Vehicle Body, and Rack Vehicle", Chinese patent application No. 202210514231.9 filed on May 11, 2022, entitled "Traveling Gear Structure for Rack Vehicle, Bogie and Rack Vehicle", and Chinese patent application No. 202210514234.2 filed on May 11, 2022, entitled "Drive Device for Rack Vehicle, Bogie and Rack Vehicle".

### FIELD

The present application relates to the field of rack vehicles, and provides a bogie and a rack vehicle.

### BACKGROUND

A rack railway is very suitable as a sightseeing route in mountainous areas or tourist attractions due to strong climbing capability, good safety and low construction costs. Especially when environmental protection restrictions have become more stringent recent years in China, the length of rack railway decreases greatly under the same climbing conditions compared with ordinary railway lines, thus, the environment of tourist attractions and areas with high environmental protection requirements is less impacted and the vegetation and geological environment along the route are effectively protected. However, the rack railway vehicles are less stable and comfortable since the rack rail adopted by the rack railway. After traveling gears of the rack vehicle wear, a center distance between the traveling gears and a rack will gradually decrease. However, due to the characteristics of the gear-rack transmission, it cannot adapt to the large amount of wheel wear. After wheels wear, the traveling gears or wheels need to be replaced, which results in higher maintenance costs.

CH674633A5 discloses a rail-vehicle wheel set usable with a rack, or with a rack combined with adhesion rails, having two adhesion wheels fixed to an axle and a pinion meshing with a stationary rack. The pinion is mounted on a guide bush turning on the axle and coupled to a member engaged by a drive on the vehicle. The bush has an outer surface eccentric to its bore accommodating the axle and on which the pinion turns. It is adjustably coupled to the vehicle body by a guide member giving different angular positions in relation to the axle.

### SUMMARY

An embodiment of the present application provides a bogie according to claim 1, which solves the defects of poor stability and comfort of a rack railway vehicle in related art and improves the stability and comfort of the rack railway vehicle.

The invention is set out as appended set of claims.

One or more of the above solutions in the embodiments of the present application have at least one of the following effects.

In the bogie provided by the embodiment of the present application, the pair of traveling gears and the pair of drive members are provided, and the pair of drive members are connected to the pair of traveling gears through the transmission devices, and the transmission devices are respectively provided on sides away from the pair of traveling gears along a transverse direction of the frame, thus, the drive members, the transmission devices, and the traveling gears form a Z-shaped structure in sequence, which makes the traveling structure of the bogie more stable and improves the operating stability of the vehicle. By mounting the pair of traveling gears on the axle through the eccentric device, it is only necessary to adjust the position of the traveling gears relative to a meter-gauge track without changing the position structure of a drive device during the process of adjusting the height of the traveling gears. Through the above adjustments, the height of the traveling gears can be precisely adjusted, ensuring accurate meshing of the traveling gears with the meter-gauge track. The bogie also has the advantages of simple structure, convenient maintenance and low maintenance costs.

By providing the above-mentioned bogie, the rack vehicle described in the second embodiment not only improves passenger comfort but also enables adaptation to rack railways with different specifications.

### BRIEF DESCRIPTION OF THE DRAWINGS

To more clearly illustrate the solutions of the embodiments based on the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative effort.
FIG. 1 is a schematic structural diagram of matching between a bogie and a meter-gauge track according to an embodiment of the present application;
FIG. 2 is a schematic side view of a bogie according to an embodiment of the present application;
FIG. 3 is a schematic top view of a bogie according to an embodiment of the present application;
FIG. 4 is a schematic left view of a bogie according to an embodiment of the present application;
FIG. 5 is a schematic cross-sectional view of an eccentric device according to an embodiment of the present application;
FIG. 6 is a schematic structural diagram of the installation of a first eccentric wheel and an adjusting ring according to an embodiment of the present application;
FIG. 7 is a schematic structural diagram of the installation of a first eccentric wheel, an adjusting ring, and a third bearing according to an embodiment of the present application;
FIG. 8 is a schematic structural diagram of a first eccentric wheel according to an embodiment of the present application;
FIG. 9 is a schematic structural diagram of a first bushing according to an embodiment of the present application;
FIG. 10 is a schematic structural diagram of an adjusting ring according to an embodiment of the present application;
FIG. 11 is a schematic structural diagram of a first support bracket according to an embodiment of the present application;
FIG. 12 is a contour schematic structural diagram of an axis of a first eccentric wheel and an axis of an axle according to an embodiment of the present application;
FIG. 13 is a non-contour schematic structural diagram of an axis of a first eccentric wheel and an axis of an axle according to an embodiment of the present application;
FIG. 14 is a first schematic diagram of an assembly relationship of a traveling gear structure according to the present application;

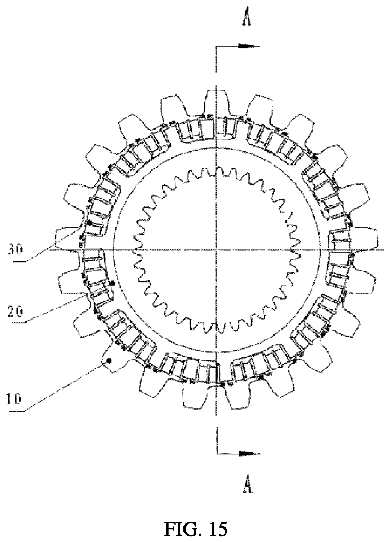

FIG. 15 is a second schematic diagram of an assembly relationship of a traveling gear structure according to the present application;

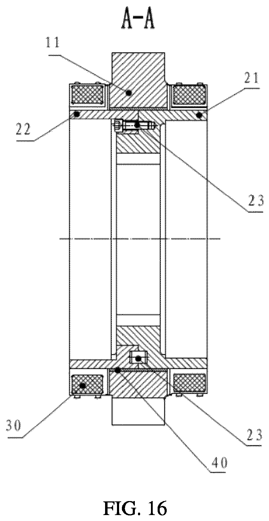

FIG. 16 is a schematic cross-sectional view along line AA in FIG.15;

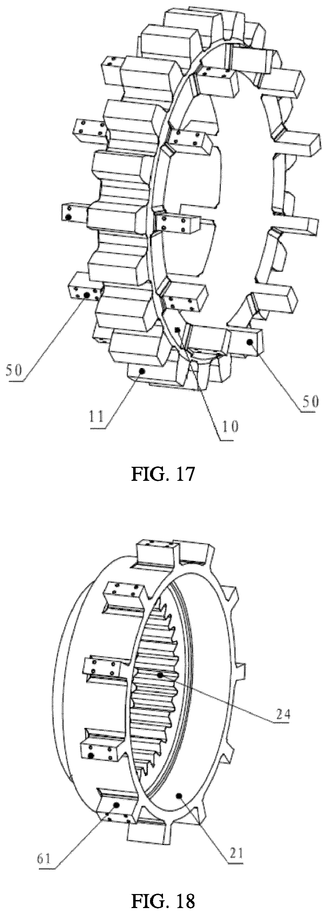

FIG. 17 is a schematic structural diagram of a first toothed ring portion in a traveling gear structure according to the present application;
FIG. 18 is a first structural schematic diagram of a first transmission connecting base in the traveling gear structure according to the present application;

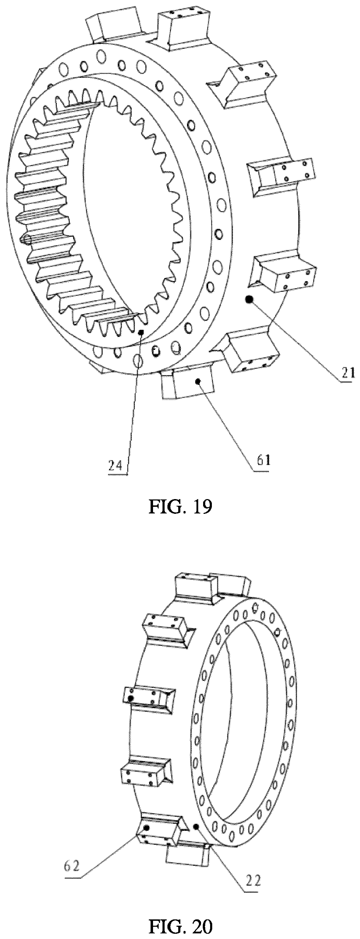

FIG. 19 is a second structural schematic diagram of a first transmission connecting base in a traveling gear structure according to the present application;
FIG. 20 is a schematic structural diagram of a first transmission supporting base in a traveling gear structure according to the present application;

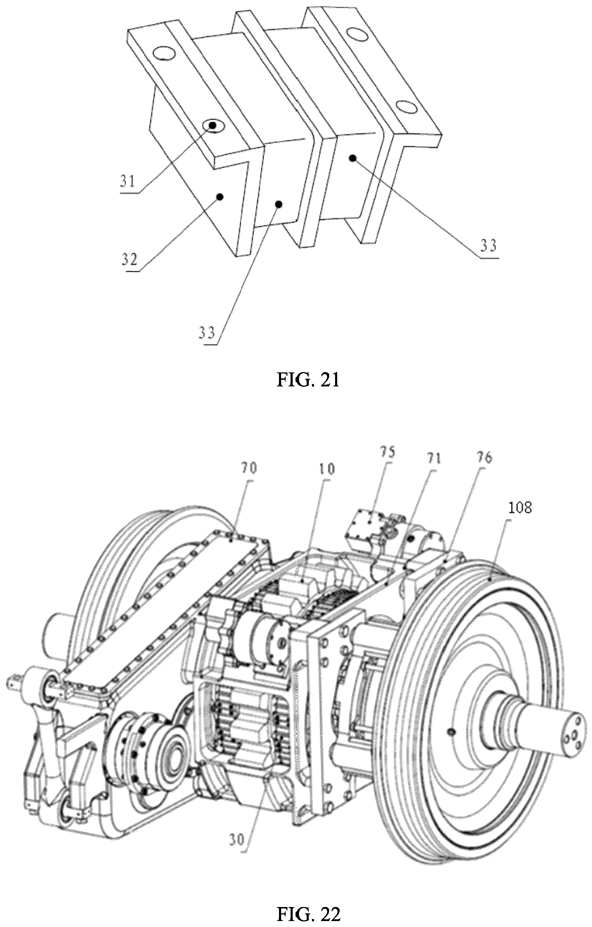

FIG. 21 is a schematic diagram of the structural relationship of a first elastic portion in a traveling gear structure according to the present application;
FIG. 22 is a first schematic diagram of an assembly relationship between a first power box, a second support bracket and a traveling gear structure in the traveling gear structure according to the present application;

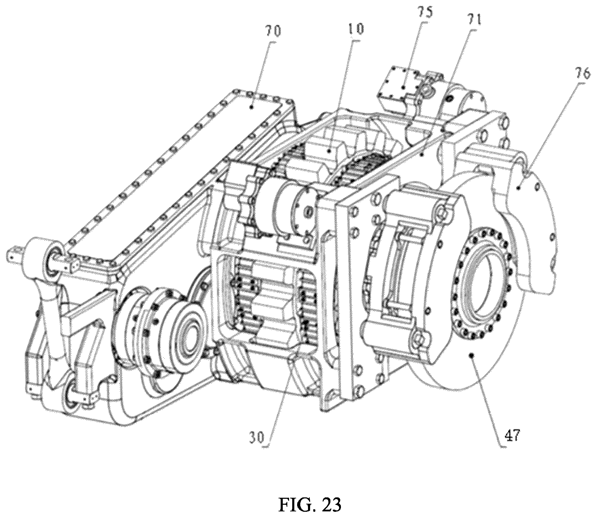

FIG. 23 is a second schematic diagram of an assembly relationship between a first power box, a second support bracket and a traveling gear structure in the traveling gear structure according to the present application;

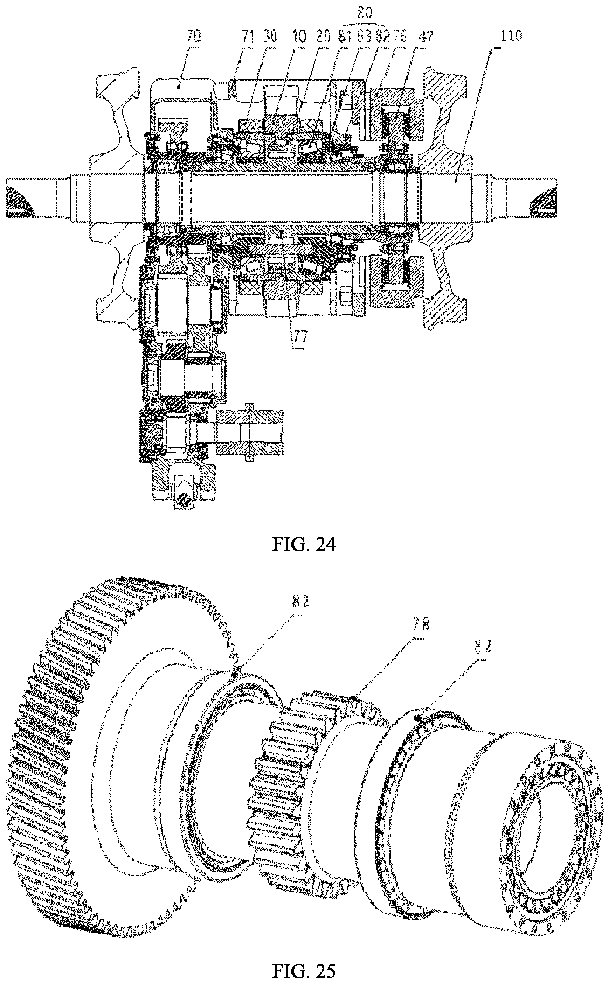

FIG. 24 is a third schematic diagram of an assembly relationship between a first power box, a second support bracket and a traveling gear structure in the traveling gear structure according to the present application;
FIG. 25 is a schematic diagram of an assembly relationship between an axle, a first transmission gear and a second bearing A in the traveling gear structure according to the present application;

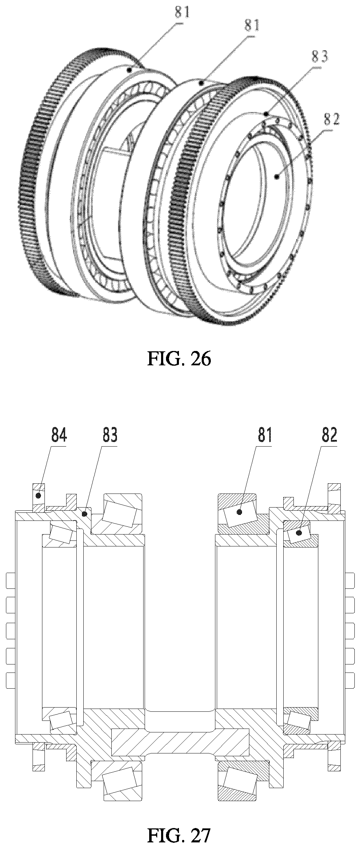

FIG. 26 is a first schematic diagram of an assembly relationship of a first adjusting assembly in the traveling gear structure according to the present application;
FIG. 27 is a second schematic diagram of an assembly relationship of a first adjusting assembly in the traveling gear structure according to the present application;
FIG. 28 is a third schematic diagram of an assembly relationship of a first adjusting assembly in the traveling gear structure according to the present application;
FIG. 29 is a first schematic diagram of an assembly relationship of a drive device for a rack vehicle according to the present application;
FIG. 30 is a second schematic diagram of an assembly relationship of a drive device for a rack vehicle according to the present application;
FIG. 31 is a third schematic diagram of an assembly relationship of a drive device for a rack vehicle according to the present application;
FIG. 32 is a fourth schematic diagram of an assembly relationship of a drive device for a rack vehicle according to the present application;
FIG. 33 is a fifth schematic diagram of an assembly relationship of a drive device for a rack vehicle according to the present application;
FIG. 34 is a sixth schematic diagram of an assembly relationship of a drive device for a rack vehicle according to the present application;
FIG. 35 is a seventh schematic diagram of an assembly relationship of a drive device for a rack vehicle according to the present application;
FIG. 36 is a schematic structural diagram of a third eccentric wheel in a drive device for a rack vehicle according to the present application;
FIG. 37 is a schematic structural diagram of a second adjusting disc in a drive device for a rack vehicle according to the present application;
FIG. 38 is a first schematic diagram of an assembly relationship between a second adjusting disc and a third eccentric wheel in a drive device for a rack vehicle according to the present application;
FIG. 39 is a second schematic diagram of an assembly relationship between a second adjusting disc and a third eccentric wheel in a drive device for a rack vehicle according to the present application;
FIG. 40 is a first schematic diagram of an assembly relationship of traveling gears in the drive device of the rack vehicle according to the present application;
FIG. 41 is a second schematic diagram of an assembly relationship of traveling gears in the drive device of the rack vehicle according to the present application;
FIG. 42 is a cross-sectional view taken along line AA in FIG. 41;
FIG. 43 is a schematic diagram of structural relationship of a second toothed ring portion in a drive device for a rack vehicle according to the present application;
FIG. 44 is a first schematic diagram of structural relationship of a second transmission connecting base in a drive device for a rack vehicle according to the present application;
FIG. 45 is a second schematic diagram of structural relationship of a second transmission connecting base in a drive device for a rack vehicle according to the present application;
FIG. 46 is a schematic diagram of structural relationship of a second transmission supporting base in a drive device for a rack vehicle according to the present application; and
FIG. 47 is a schematic diagram of the structural relationship of a second elastic portion in a drive device for a rack vehicle according to the present application.

### Reference numerals:

100 frame; 102 side beam; 104 cross beam; 106 end beam; 108 wheelset; 109 traveling gear; 110 axle; 111 transmission device; 112 drive member; 114 first support bearing; 116 first eccentric wheel; 118 second support bearing; 120 first support bracket; 122 mounting hole; 124 first positioning hole; 126 adjusting ring; 128 second positioning hole; 130 locking member; 132 first bushing; 134 synchronous block; 136 bottom plate; 138 air spring; 140 bearing seat; 142 anti-roll torsion bar; 144 ball hinge structure; 146 mounting bracket; 148 brake shoe; 150 second braking device; 152 rim lubricating device; 154 inner ring gear; 156 outer ring gear; 158 snap-fit slot; 160 annular positioning stage; 162 collar; 164 retaining ring; 166 mounting slot; 10 first toothed ring portion; 11 first outer gear teeth; 20 first transmission portion; 21 first transmission connecting base; 22 first transmission supporting base; 23 first connecting unit; 24 first boss; 30 first elastic portion; 31 first mounting plate A; 32 second mounting plate A; 33 first elastomer; 40 second bushing; 50 first mounting base A; 60 second mounting base A; 61 first sub-mounting base A; 62 second sub-mounting base A; 70 first power box; 71 second support bracket; 47 first brake disc; 75 first brake cylinder; 76 first brake caliper; 77 first axle sleeve; 78 first transmission gear; 80 first adjusting assembly; 81 first bearing A; 82 second bearing A; 83 second eccentric wheel; 84 first adjusting disc; 210 second power box; 220 support bracket; 250 second axle sleeve; 51 second transmission gear; 660 traveling gear; 661 second toothed ring portion; 611 second outer gear teeth; 662 second transmission portion; 621 second transmission connecting base; 622 second transmission supporting base; 623 second connecting unit; 624 second boss; 63 second elastic portion; 631 first mounting plate B; 632 second mounting plate B; 633 second elastomer; 64 first mounting bases B; 65 second mounting base B; 651 first sub-mounting base B; 652 second sub-mounting base B; 770 second adjusting assembly; 771 first bearing B; 72 second bearing B; 73 third eccentric wheel; 74 second adjusting disc; 880 second brake disc; 881 second brake cylinder; 82 second brake caliper; 90 third bushing.

### DETAILED DESCRIPTION

Implementations of the present application are further described in detail below with reference to the drawings and embodiments. The following embodiments are used to illustrate the present application, but are not intended to limit the scope of the present application.

In the description of the present application, it should be noted that, the orientation or positional relations specified by terms such as "central", "longitudinal", "lateral", "up", "down", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have a particular orientation and be constructed and operated in a particular orientation, and thus it is not to be construed as limiting the present application. Furthermore, the terms "first", "second", "third" and the like are only used for descriptive purposes and should not be construed as indicating or implying a relative importance.

In the description of the present application, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meanings of the terms above in the present application can be understood by a person skilled in the art in accordance with specific conditions.

In the embodiments of the present application, unless otherwise expressly specified and defined, a first feature is "on" or "under" a second feature can refer to that the first feature is directly contacted with the second feature, or the first feature is indirectly contacted with the second feature through an intermediate medium. In addition, the first feature is "on", "above" and "over" the second feature can refer to that the first feature is directly above or obliquely above the second feature, or simply refer to that the level height of the first feature is higher than that of the second feature. A first feature is "under", "below" and "beneath" a second feature can refer to that the first feature is directly below or obliquely below the second feature, or simply refer to that the level height of the first feature is lower than that of the second feature.

In the description of this specification, description with reference to the terms "an embodiment", "some embodiments", "an example", "specific example", "some examples" and the like, refers to that specific features, structures, materials or characteristics described in combination with an embodiment or an example are included in at least an embodiment or example according to the embodiments of the present application. In this specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

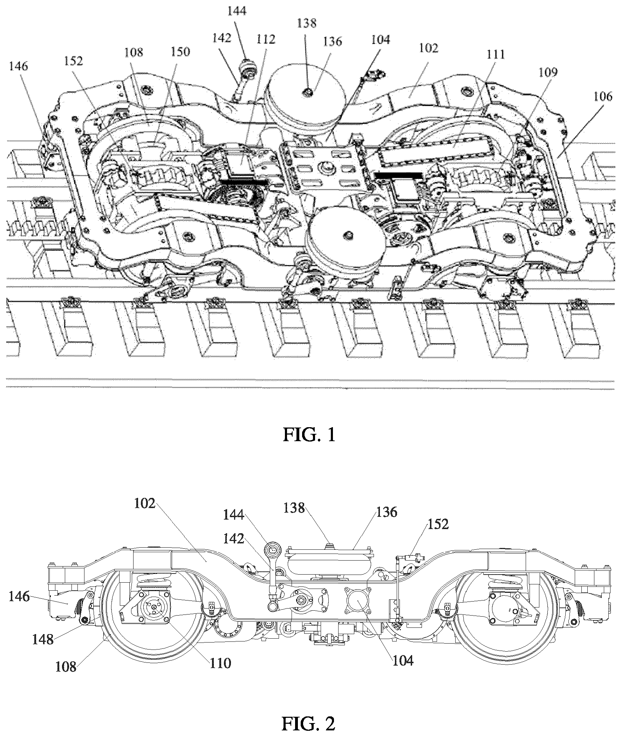

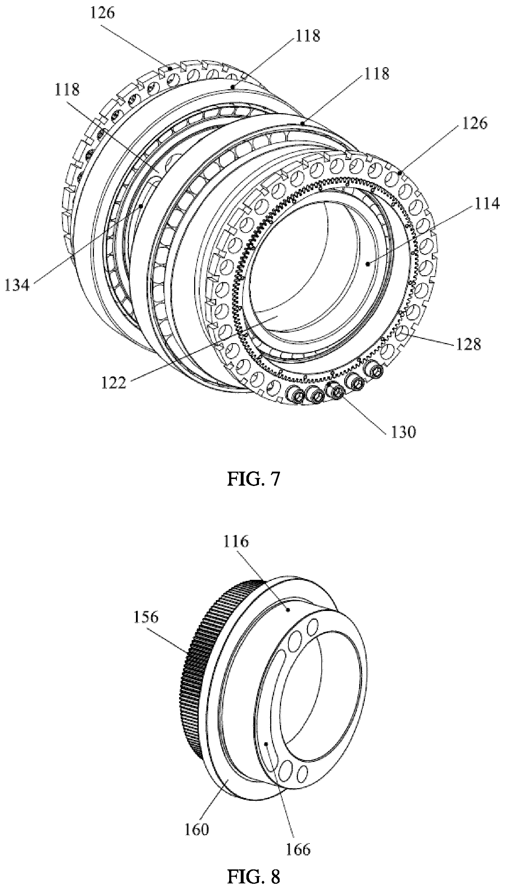

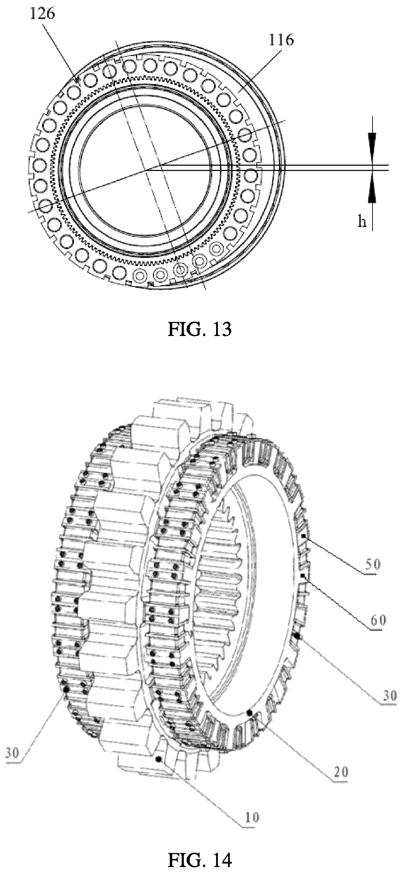

As shown in FIG. 1 to FIG. 13, the present application provides a bogie, including a frame 100, two wheelsets 108, a pair of traveling gears 109, and a pair of drive members 112. The frame 100 includes a pair of side beams 102, a pair of cross beams 104 and a pair of end beams 106 oppositely disposed, both ends of the pair of cross beams 104 are respectively connected between the pair of side beams 102 and the pair of end beams 106 are respectively connected to both ends of the pair of side beams 102. Two wheelsets 108 are rotatably mounted on the frame 100 through axles 110 and respectively located in an area surrounded by the end beams 106, cross beams adjacent to the end beams 104 and the pair of side beams 102. The pair of traveling gears 109 are respectively mounted on the axle 110 through an eccentric device and disposed along a longitudinal axis of the frame 100. The pair of drive members 112 are respectively mounted on the cross beams 104, and respectively in transmission connection with the pair of traveling gears 109 through transmission devices 111, and the transmission devices 111 are respectively provided on sides away from the pair of traveling gears 109 along a transverse direction of the frame 100.

In the bogie provided by the embodiment of the present application, the pair of traveling gears 109 and the pair of drive members 112 are provided, and the pair of drive members 112 are connected to the pair of traveling gears 109 through the transmission devices 111, and the transmission devices 111 are respectively provided on sides away from the pair of traveling gears 109 along a width direction of the frame 100, the drive members 112, the transmission devices 111, and the traveling gears 109 form a Z-shaped structure in sequence, which makes the traveling structure of the bogie more stable and improves the operating stability of the vehicle. By mounting the pair of traveling gears 109 on the axle 110 through the eccentric device, it is only necessary to adjust the position of the traveling gears 109 relative to a meter-gauge track without changing the position structure of a drive device during the process of adjusting the height of the traveling gears 109. Through the above adjustments, the height of the traveling gears 109 can be precisely adjusted, ensuring accurate meshing of the traveling gears 109 with the meter-gauge track. Therefore, the bogie also has the advantages of simple structure, convenient maintenance and low maintenance costs.

Referring to FIG. 1 to FIG. 13, the frame 100 is configured to mount components such as the wheelset 108, the traveling gears 109, the drive members 112, etc. The frame 100 includes the pair of side beams 102, the pair of cross beams 104 and the pair of end beams 106 that are oppositely disposed. The pair of side beams 102 and the pair of end beams 106 are formed by welding steel plates, and the pair of cross beams 104 are made of seamless steel pipes.

Both ends of the pair of cross beams 104 are respectively connected between the pair of side beams 102. It can be understood that in the embodiment of the present application, the pair of side beams 102, the pair of end beams 106 and the pair of cross beams 104 are spliced to form a structure with a shape of Unicode character U+76EE, which increases the structural strength of the frame 100, and solves the problem of insufficient installation space in the bogie of the rack vehicle.

Two wheelsets 108 are mounted on the frame 100 through axles 110 and respectively located in a mounting space surrounded by the end beams 106, the cross beams 104 adjacent to the end beams 106 and the pair of side beams 102. The axle 110 mentioned here may be hollow shafts, which reduces the weight of the axle 110 and also facilitates maintenance personnel to detect flaws in the axle 110.

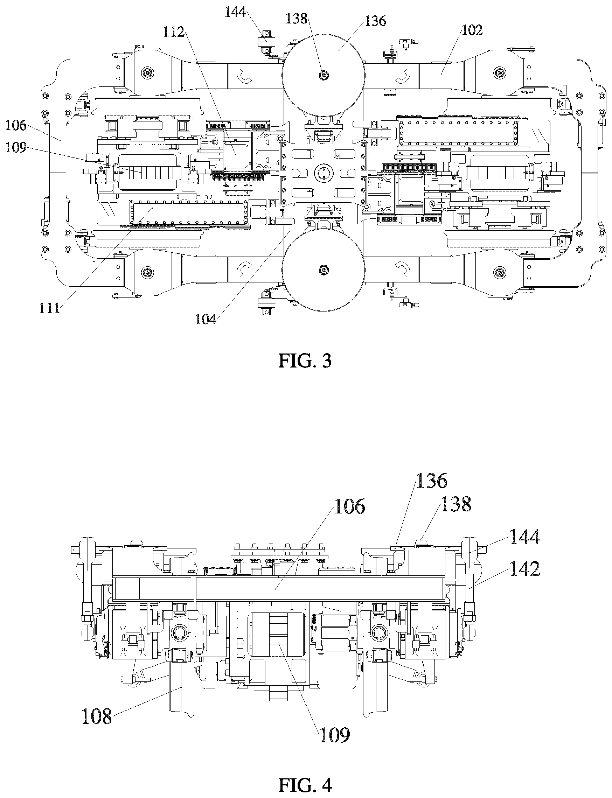

The pair of traveling gears 109 are respectively mounted on the axle 110 through an eccentric device and disposed along a longitudinal axis of the frame 100. The longitudinal direction of the frame 100 mentioned here refers to the length direction of the frame 100, that is, left and right directions as shown in FIG. 3. By disposing the pair of traveling gears 109 and being in transmission connection with the two wheelsets 108 respectively, the climbing capacity and load-bearing transportation capacity of the bogie can be effectively improved.

In the embodiment of the present application, in order to ensure the stability of the bogie, the transmission devices 111 in transmission connection between the pair of drive members 112 and the pair of traveling gears are respectively provided on sides away from the pair of traveling gears 109 along the transverse direction of the frame 100.

Referring to FIG. 3, the transmission device 111 on the left is located below the traveling gear 109 on the left, and the transmission device 111 on the right is located above the traveling gear 109 on the right, which ensures the balance performance of the bogie in the upward and downward directions as shown in FIG. 3 and avoids uneven weight distribution of the bogie in the upward and downward directions.

It can be understood that the traveling gear 109 on the left, the transmission device 111 on the left, the drive member 112 on the left, the traveling gear 109 on the right, the transmission device 111 on the right, and the drive member 112 on the right are formed in sequence similar to a Z-shaped structure. By such disposition, the lateral force caused by the transverse movement of the vehicle is effectively offset, and the load on the node is greatly reduced. The transmission device 111 and the drive member 112 at one side are connected to the side beams 102 using bolts, which avoids stress concentration at the connection part of the side beams 102.

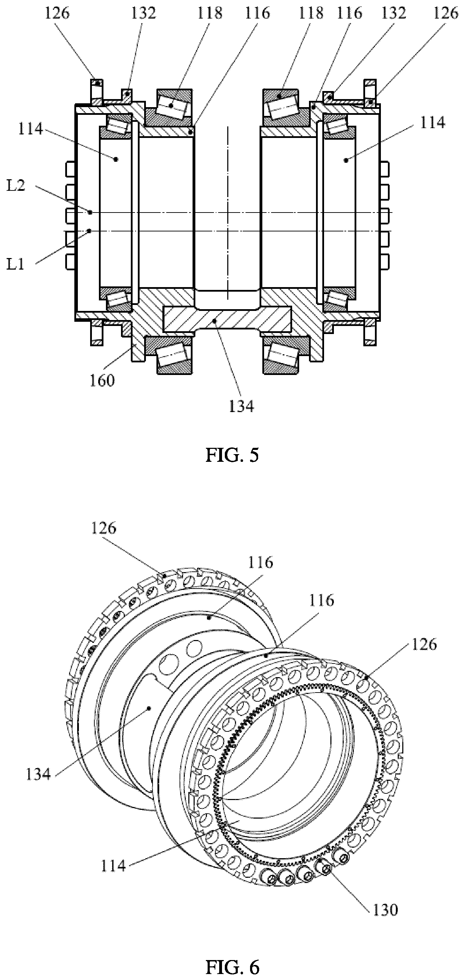

Referring to FIG. 5 to FIG. 13, in an embodiment of the present application, the traveling gears 109 are mounted on the axle 110 through an eccentric device. The eccentric device includes a pair of first support bearings 114, a pair of second support bearings 118 and a pair of first eccentric wheels 116. Inner rings of the pair of first support bearings 114 are sleeved on the axle 110. The pair of first eccentric wheels 116 are sleeved on outer rings of the first support bearings 114 and eccentrically provided with respect to the axle 110, and a position of the first eccentric wheels 116 relative to the first support bearings 114 is locked through a locking mechanism. Inner rings of the pair of second support bearings 118 are sleeved outside the first eccentric wheels 116, and the traveling gears 109 are sleeved on outer rings of the second support bearings 118.

According to the embodiment of the present application, by sleeving the first support bearings 114 on the axle 110, sleeving the second support bearings 118 on the inner rings of the traveling gears 109, and adjusting a distance L between axes of the first support bearings 114 and axes of the second support bearings 118 through the first eccentric wheels 116, the position of the traveling gears 109 relative to the axle 110 are adjustable, that is, a height h of the traveling gears 109 relative to the axle 110 is adjustable. In this way, in the process of adjusting the height of the traveling gears 109, it is only necessary to adjust the position of the first eccentric wheels 116 relative to the first support bearings 114, without changing the position and structure of the drive device. Through adjusting the first eccentric wheels 116, the height of the traveling gears 109 can be precisely adjusted, ensuring accurate meshing of the traveling gears 109 with the meter-gauge track. Therefore, the bogie also has the advantages of simple structure, convenient maintenance and low maintenance costs.

Referring to FIG. 5 to FIG. 13, in the embodiment of the present application, the first support bearings 114 are sleeved on the axle 110. There are two first support bearings 114, and the two first support bearings 114 are spaced apart on the axle 110. The axes of the two first support bearings 114 are collinear with the axis of the axle 110.

Referring to FIG. 5, the first eccentric wheel 116 is sleeved on an outer circumferential surface of the first support bearings 114. The axis L1 of the first eccentric wheel 116 is eccentrically disposed with respect to the axis L2 of the axle 110. Since the number of the first support bearings 114 is two, the number of the first eccentric wheels 116 is two and the two first eccentric wheels 116 are respectively sleeved on the outer rings of the two first support bearings 114. The position of the first eccentric wheels 116 relative to the first support bearings 114 can be locked by a locking mechanism. It can be understood that since the first eccentric wheels 116 and the axle 110 are eccentrically disposed, the first eccentric wheels 116 and the first support bearings 114 are also eccentrically disposed. By disposing the relative positions of the first eccentric wheels 116 and the first support bearings 114, the relative position of the axis of the first eccentric wheels 116 and the axis of the axle 110 can be adjusted. After the relative positions between the first eccentric wheels 116 and the first support bearings 114 are adjusted, the relative position therebetween can be locked by a locking mechanism.

The second support bearings 118 is sleeved outside the first eccentric wheels 116, and the traveling gears 109 is sleeved on the outer rings of the second support bearings 118. As mentioned above, by adjusting the relative position of the first eccentric wheels 116 and the axle 110, the relative position of the traveling gears 109 and the axle 110 can be adjusted synchronously, and the position of the traveling gears 109 relative to the axle 110 can be adjusted, which ensures that the traveling gears 109 can always be meshed with the meter-gauge track, stably drives the rack vehicle and ensures that the traveling gears 109 can still be meshed with the meter-gauge track even if the traveling gears 109 wear.

According to an embodiment of the present application, the bogie further includes a first support bracket 120 mounted on the frame 100. The first support bracket 120 is provided with a plurality of mounting holes 122 for mounting the first support bearings 114. A plurality of first positioning holes 124 are provided on an end surface of the mounting holes 122 along the circumferential direction of the mounting holes 122. The locking mechanism includes an adjusting ring 126 and a locking member 130; where the adjusting ring 126 is connected to an outer circumference of the first eccentric wheels 126, where a plurality of second positioning holes 128 are provided on an end surface of the adjusting ring 126 along a circumferential direction of the adjusting ring 126. The locking member 130 penetrates through the first positioning holes 124 and the second positioning holes 128 to lock a position of the first eccentric wheels 116 relative to the first support bracket 120.

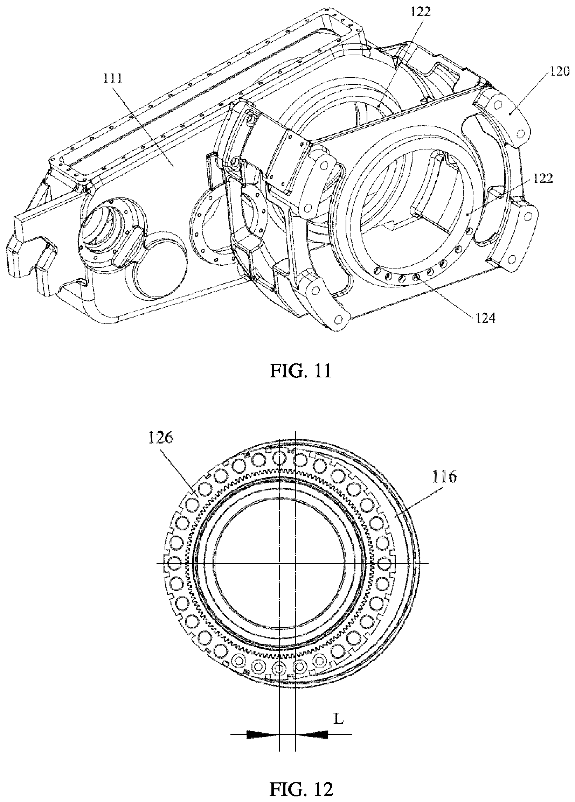

Referring to FIG. 11, the bogie further includes a first support bracket 120, and the first support bracket 120 is mounted on the frame 100. In the embodiment of the present application, the first support bracket 120 is used for mounting the transmission device 111, the first support bearings 114, the axle 110 and other parts. Correspondingly, the first support bracket 120 is provided with a plurality of mounting holes 122 for mounting the first support bearings 114.

A plurality of equally spaced first positioning holes 124 are provided on the end surface of the mounting holes 122 along the circumferential direction of the mounting holes 122. The locking mechanism can be connected with the first positioning holes 124 on the end surface of the mounting holes 122 of the first support bracket 120 to lock the first eccentric wheels 116 and the first support bracket 120.

Correspondingly, the locking mechanism includes the adjusting ring 126 for locking with the first support bracket 120 and the locking member 130 for locking the relative position of the adjusting ring 126 and the first support bracket 120. The adjusting ring 126 is connected to an outer circumferential surface of each of the first eccentric wheels 116. In order to lock tightly the adjusting ring 126 with the first support bracket 120, the adjusting ring 126 is provided with second positioning holes 128 in one-to-one correspondence with the first positioning holes 124 along the circumferential direction of the adjusting ring 126. The locking member 130 penetrates through the second positioning holes 128 on the adjusting ring 126 and the first positioning holes 124 on the first support bracket 120 to lock the adjusting ring 126 to the first support bracket 120.

In actual use, the position of the first support bracket 120 is fixed. By adjusting the position of the adjusting ring 126, the relative rotation angle between the adjusting ring 126 and the first support bracket 120 can be adjusted. When the adjustment is completed, the locking member 130 penetrates through the second positioning holes 128 and the first positioning holes 124 to lock the adjusting ring 126 and the first support bracket 120 with each other. That is, the relative position of the traveling gears 109 and the axel can be locked by locking the relative position of the first eccentric wheels 116 and the first support bracket 120, thereby adjusting the height of the traveling gears 109.

Referring to FIG. 11, in the embodiment of the present application, a transmission device 111 is also integrated on the first support bracket 120, which makes the structure of the bogie more compact.

According to an embodiment of the present application, an inner ring gear 154 is provided on the inner wall of the adjusting ring 126, and an outer ring gear 156 is provided on the outer circumference of the first eccentric wheels 116. The inner ring gear 154 is meshed with the outer ring gear 156 to connect the adjusting ring 126 with the first eccentric wheels 116.

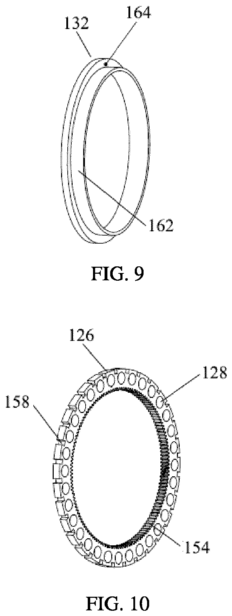

Referring to FIG. 10, by providing the inner ring gear 154 on the inner wall of the adjusting ring 126, and providing the outer ring gear 156 on the outer circumference of the first eccentric wheels 116, and meshing the inner ring gear 154 and the outer ring gear 156 with each other, the adjustment accuracy of enabling the adjusting ring 126 to drive the first eccentric wheels 116 is higher. That is, when the adjusting ring 126 is rotated, the first eccentric wheels 116 can be precisely adjusted through the meshing transmission of the inner ring gear 154 and the outer ring gear 156. The mode of adjusting the adjusting ring 126 and the first eccentric wheels 116 can also be performed in other ways. For example, a positioning boss can be provided on the inner wall of the adjusting ring 126 and a positioning protrusion can be provided on the outer circumference of the first eccentric wheels 116.

According to an embodiment of the present application, the outer ring of the adjusting ring 126 is provided with a snap-fit slot 158.

Referring to FIG. 10, by providing a snap-fit slot 158 on the outer ring of the adjusting ring 126, when the maintenance personnel adjust the adjusting ring 126, an adjustment tool can be directly snapped in the snap-fit slot 158 to adjust the adjusting ring 126.

According to an embodiment of the present application, a first bushing 132 is sleeved on the outer circumference of each of the first eccentric wheels 116, and the first bushing 132 is configured to reduce a friction between the outer circumference of the first eccentric wheels 116 and the inner wall of the mounting holes 122.

Referring to FIG. 5, a first bushing 132 is sleeved on the outer circumference of each of the first eccentric wheels 116. The outer circumferential surface of the first bushing 132 is attached to the inner wall of the mounting holes 122 on the first support bracket 120 to reduce the friction force between the outer circumferential surface of the eccentric wheel 116 and the inner wall of the mounting holes 122. It can be understood that when the first bushing 132 and the mounting holes 122 on the first support bracket 120 are nested with each other, each of the first eccentric wheels 116 can rotate around the axis of the first bushing 132.

According to an embodiment of the present application, an annular positioning stage 160 is provided on the outer wall of the first eccentric wheels 116 along the circumferential direction of the first eccentric wheels 116. The first bushing 132 includes a collar 162 and a retaining ring 164; the collar 162 is sleeved on the outer circumference of each of the first eccentric wheels 116; the retaining ring 164 is sleeved on the outer circumference of the collar 162 and is configured to abut against and matched with the annular positioning stage 160.

Referring to FIG. 5, an annular positioning stage 160 is provided on the circumferential surface of each of the first eccentric wheels 116. The annular positioning stage 160 can position the axial position of the first bushing 132 relative to the first eccentric wheels 116.

The first bushing 132 includes a collar 162 and a retaining ring 164. The collar 162 is directly sleeved on the outer circumference of each of the first eccentric wheels 116. The retaining ring 164 is disposed on the circumferential surface of the collar 162 and abuts against an annular positioning stage 160 on the circumferential surface of each of the first eccentric wheels 116, thus, the axial position of the first bushing 132 relative to the first eccentric wheels 116 can be limited.

According to an embodiment of the present application, mounting slots 166 are provided on opposite sides of the two first eccentric wheels 116, and synchronization blocks 134 are provided in the mounting slots 166.

Referring to FIG. 5 to FIG. 8, in an embodiment of the present application, in order to improve the synchronization of the two first eccentric wheels 116, mounting slots 166 are provided on the opposite sides of the two first eccentric wheels 116. Synchronizing blocks 134 are inserted into the mounting slots 166 of the first eccentric wheels 116. With this arrangement, when the maintenance personnel adjust the position of the first eccentric wheel 116 on one side, the first eccentric wheel 116 on the other side can be synchronously adjusted.

Referring to FIG. 4, in a plane parallel to the meter-gauge track, the projection of the wheelset 108 is located within the projection of the frame 100. By disposing the projection of the wheelset 108 completely within the projection of the frame 100, the frame 100 is externally placed, which facilitates maintenance and repair of the frame 100. It can also meet the track gauge requirements of the rack vehicle. In addition, since the structural size of the frame 100 is relatively larger, the frame 100 is relatively stabler.

According to an embodiment of the present application, a secondary damping device is also provided on the side beams 102 of the frame 100. The secondary damping device is mounted between the side beams 102 and the vehicle body. The secondary damping device includes an air spring 138. By disposing the secondary damping device and disposing the air spring 138 in the secondary damping device, the vibration damping effect between the vehicle body and the bogie body is further improved, which improves the comfort of the vehicle. In the embodiment of the present application, the air spring 138 can adopt a conical air spring 138 with large displacement capacity, small vertical and lateral stiffness, and large effective diameter. This can ensure the vibration damping performance of the vehicle body and improve the riding experience of the passenger.

Referring to FIG. 1 to FIG. 4, according to an embodiment of the present application, the secondary damping device further includes a bottom plate 136 disposed between the bottom of the air spring 138 and the side beams 102. In the embodiment of the present application, the bottom plate 136 can adopt a circular structure, which can increase the contact area and avoid stress concentration on the bogie body. At the same time, the secondary damping device can also be equipped with a lateral damper to reduce the vibration amplitude of the vehicle body in the lateral direction. It can be understood that the air spring 138 is a conical spring, and the air spring 138 is conical in a direction away from the side beam 102 from the bottom plate 136.

Referring to FIG. 1 to FIG. 4, according to an embodiment of the present application, the bogie further includes an anti-roll device. The anti-roll device is mounted on the side beams 102. The anti-roll device includes a bearing seat 140, a torsion bar shaft and an anti-roll torsion bar 142. The bearing seat 140 is mounted at the bottom of each of the side beams 102; the torsion bar shaft is mounted in the bearing seat 140; the anti-roll torsion bar 142 is connected between the torsion bar shaft and the vehicle body and a ball hinge structure 144 is provided at an end of the anti-roll torsion bar 142 connected to the vehicle body.

The bearing seat 140 is mounted at the bottom of each of the side beams 102 and is configured to fix the torsion bar shaft. The bearing seat 140 can be mounted at the bottom of the side beam 102 through bolts. Both ends of the anti-roll torsion bar 142 are respectively connected between the ends of the torsion bar shaft and the vehicle body. A ball hinge structure 144 is provided at an end of the anti-roll torsion bar 142 connected to the vehicle body. By providing the ball hinge structure 144, the amplitude of the vehicle body in any direction can be offset and the damping effect of the vehicle body is improved. Through this arrangement, the anti-roll device greatly ensures the minimum passing curve performance, and the anti-roll stiffness of the vehicle is improved by optimizing the stiffness of the anti-roll torsion bar 142.

According to an embodiment of the present application, the bogie further includes a first braking device, and the first braking device includes a mounting bracket 146 and brake shoes 148, where the mounting bracket 146 is mounted at the bottom of the side beam 102; the brake shoes 148 are provided on the mounting bracket 146 and opposite to a tread of the wheelsets 108.

Referring to FIG. 2, the first braking device is disposed in the form of the mounting bracket 146 and the brake shoes 148, which ensures that the first braking device has the advantages of simple structure and good economy. The mounting bracket 146 is mounted on the side beam 102, and the mounting bracket 146 is used for mounting the brake shoes 148. The shape of the brake shoes 148 is adapted to the shape of the tread of the wheelset 108. When the brake shoes 148 are attached to the tread of the wheelset 108, the friction force between the brake shoes 148 and the tread of the wheelset 108 can lock the wheelset 108, thereby providing the braking function.

According to an embodiment of the present application, the bogie further includes a second braking device 150. The second braking device 150 includes a brake disc, two friction rings and a brake cylinder. The brake disc and the wheelset 108 are coaxially disposed, two friction rings are respectively provided on opposite sides of the wheelset 108, and a heat dissipation structure is disposed between the two friction rings. The brake cylinder is a provided on the side beam 102 and is used for driving the two friction rings to move relative to the wheelset 108.

Referring to FIG. 1, by disposing the second braking device 150 in the form of the friction rings and a brake cylinder, the overall structure of the second braking device 150 is compact and occupies a small space. The brake disc is coaxially disposed with the wheelset 108. The brake disc can be disposed on the axle 110 on which the wheelset 108 is mounted. A hollow shaft is disposed on the wheelset 108 and supported by bearings and relative rotation is generated between the hollow shaft and the axle 110 to enable the hollow shaft to transmit driving torque, which solves transmission problem and a problem of vehicle operation on large slopes. By disposing a heat dissipation structure between the two friction rings, the overheating phenomenon generated when the friction rings clamp the brake disc can be effectively avoided, which ensures the service life and braking performance of the friction ring.

In the embodiment of the present application, the brake cylinder is disposed on the bogie body, and the two friction rings are respectively disposed on both sides of the wheelset 108. When the brake cylinder supplies oil to the two friction rings, the two friction rings are driven to act in the direction of clamping the brake disc.

According to an embodiment of the present application, the bogie further includes a rim lubricating device 152, mounted on each of the side beams 102 and facing the two traveling gears 109 respectively.

Due to the large wheelbase of the bogie, the rim lubricating device 152 is provided at the traveling gear 109. By disposing the rim lubricating device 152, the wheel-rail space can be lubricated regularly and the problem of abnormal wear between the wheel-rail space can be solved.

An embodiment of the present application provides a vehicle body, including a vehicle main body and the above-mentioned bogie, and the bogie is mounted below the vehicle main body.

In the vehicle body provided by the embodiment of the present application, by providing the above-mentioned bogie, the stability of the vehicle body can be improved and the shaking and a vibration amplitude of the vehicle body can be reduced.

An embodiment of the present application provides a rack vehicle, including the above-mentioned bogie or the above-mentioned vehicle body.

In the rack vehicle provided by the third embodiment of the present application, by providing the above-mentioned bogie or vehicle body, it can not only improve the riding experience of passengers, but also adapt to rack railways of different specifications.

The present application provides a traveling gear structure for a rack vehicle, including: a first toothed ring portion 10, a first transmission portion 20 and a plurality of first elastic portions 30. An outer ring of the first toothed ring portion 10 is provided with a first outer gear teeth 11, and the first outer gear teeth 11 are meshed with a rack provided on the ground. An outer ring of the first transmission portion 20 is matched with an inner ring of the first toothed ring portion 10. The plurality of first elastic portions 30 are evenly distributed on the side of the first toothed ring portion 10 along the circumferential direction, and are respectively connected to the first toothed ring portion 10 and the first transmission portion 20.

The present application provides a traveling gear structure for a rack vehicle to solve the problem of large impact and vibration due to the characteristics of gear and rack transmission, which reduces the riding comfort and causes problems for the equipment on the vehicle. By adding an annularly disposed first elastic portions 30 on the side of the traveling gears, the problem of vibration and impact caused by unstable meshing during the driving of the rack vehicle is solved, and the hazards to the equipment on the vehicle caused by the vibration is avoided and ride comfort is improved.

In some possible embodiments of the present application, the plurality of first elastic portions 30 form an elastic assembly along the circumferential direction of the first toothed ring portion 10, and two elastic assemblies are symmetrically disposed on both sides of the first toothed ring portion 10 along an axial direction.

The present embodiment provides an implementation of the first elastic portions 30, by symmetrically disposing the first elastic portions 30 on both sides of the first toothed ring portion 10 along the axial direction of a first axle sleeve 77, and disposing the plurality of first elastic portions 30 annularly, the capability of the traveling gear to transmit torque is improved while an eccentric load of the traveling gear is decreased and the impact of the gear meshing process is reduced, and a large torque of the traveling gear is transmitted and needs of the rack vehicle are satisfied.

In a possible implementation, disposing the first elastic portions 30 increases the damping of the traveling gear, reduces noise caused by meshing between the gear and the rack, reduces the vibration experienced by the rack vehicle during driving, and improves the riding comfort.

In a possible implementation, the two groups of elastic assemblies are symmetrically disposed, which solves the need for the traveling gear to transmit very high torque when the rack vehicle operates on a large slope.

In a possible implementation, each elastic assembly includes a plurality of first elastic portions 30 disposed annularly. This arrangement improves the uniformity of the load and impacts and vibrations experienced by the traveling gears can be absorbed well.

In a possible implementation, an elastic assembly composed of a plurality of first elastic portions 30 is disposed on the side of the first toothed ring portion 10, radial space is freed and a larger transmission structure is connected internally, which improves the performance of a transmission system.

In some possible embodiments of the present application, the traveling gear structure further includes a second bushing 40. The second bushing 40 is disposed between the inner ring of the first toothed ring portion 10 and the outer ring of the first transmission portion 20 to decrease a friction coefficient between the first toothed ring portion 10 and the first transmission portion 20.

The present embodiment provides an implementation of the second bushing 40. By disposing the second bushing 40, the friction coefficient is decreased, and a friction problem caused by relative displacement between the first toothed ring portion 10 and the first transmission portion 20 is solved.

In a possible implementation, the second bushing 40 is made of a self-lubricating material.

In a possible implementation, the second bushing 40 is made of a carbon-based material.

In a possible implementation, the second bushing 40 is a self-lubricating bushing.

In some possible embodiments of the present application, the traveling gear structure further includes a plurality of first mounting bases A 50 and a plurality of second mounting bases A 60. The first mounting bases A 50 are evenly distributed on a side of the first toothed ring portion 10 along the circumferential direction; the second mounting bases A 60 are evenly distributed on the outer ring of the first transmission portion 20 along the circumferential direction, and the first mounting bases A 50 and the second mounting bases A 60 are disposed staggeredly. The first elastic portions 30 are detachably connected to the adjacent first mounting bases A 50 and the second mounting bases A 60, respectively.

The present embodiment provides an implementation of the first mounting bases A 50 and the second mounting bases A 60. By disposing the first mounting bases A 50 and the second mounting bases A 60, the first elastic portions 30 are mounted and positioned at the side of the first toothed ring portion 10.

In a possible implementation, the first mounting bases A 50 and the second mounting bases A60 are disposed staggeredly on the side of the first toothed ring portion 10, and the first mounting bases A 50 and the second mounting bases A 60 are provided with connection structure such as mounting holes. The first elastic portions 30 are respectively connected to the first mounting bases A 50 and the second mounting bases A 60 through screws or other connecting components.

In a possible implementation, when the first toothed ring portion 10 is impacted during the operation of the traveling gear, the first elastic portions 30 provided in the first mounting bases A 50 and the second mounting bases A 60 are deformed to absorb impact and vibration.

In some possible embodiments of the present application, the first transmission portion 20 includes: a first transmission connecting base 21, a first transmission supporting base 22 and a plurality of first connecting units 23. A first boss 24 is provided on a first side of the first transmission connecting base 21, and an inner ring of the first boss 24 is provided with inner ring gears. The first transmission supporting base 22 is insertedly matched with the first transmission connecting base 21 through the first boss 24. The plurality of first connecting units 23 are provided on a matching surface of the first transmission connecting base 21 and the first transmission supporting base 22 to detachably connect the first transmission connecting base 21 and the first transmission supporting base 22. The plurality of second mounting bases A 60 are evenly distributed on the outer rings of the first transmission connecting base 21 and the first transmission supporting base 22 along the circumferential direction.

The present embodiment provides an implementation of the first transmission connecting base 21, the first transmission supporting base 22 and the first connecting units 23. By disposing the first transmission connecting base 21, the first transmission supporting base 22 and the first connecting units 23, the first transmission portion 20 is more conveniently connected to the first toothed ring portion 10.

It should be noted that the first toothed ring portion 10 and the first transmission portion 20 are connected through the first elastic portions 30.

Furthermore, the inner ring gears provided on the inner ring of the first boss 24 provide the transmission connection between the traveling gear and an external gear corresponding thereto, which facilitates the installation and disassembly of the traveling gears.

In a possible implementation, the matching surface of the first transmission connecting base 21 and the first transmission supporting base 22 is provided with corresponding mounting holes or screw holes, and connectors are matched with the mounting holes or screw holes to connect the first transmission connecting base 21 to the first transmission supporting base 22. For simplicity, the present application does not describe the connection in too much detail. Please refer to the accompanying drawings and settings in related fields.

In some possible embodiments of this application, each of the second mounting bases A 60 includes: a plurality of first sub-mounting bases A 61 and a plurality of second sub-mounting bases A 62. The first sub-mounting bases A 61 are evenly distributed circumferentially on the outer ring of the first transmission connecting base 21, and are disposed close to a second side of the first transmission connecting base 21 relative to the first boss 24; and the plurality of second sub-mounting bases A 62 are evenly distributed circumferentially on the outer ring of the first transmission supporting base 22, and are disposed close to a first side of the first transmission supporting base 22 away from the first transmission connecting base 21.

The present embodiment provides an implementation of the first sub-mounting bases A 61 and the second sub-mounting bases A 62. By disposing the plurality of first sub-mounting bases A 61 circumferentially on the second side of the first transmission connecting base 21, and the plurality of second sub-mounting bases A 62 circumferentially on the first side of the first transmission supporting base 22, the first elastic portions 30 are disposed on both sides of the first toothed ring portion 10.

It should be noted that the first mounting bases A 50 and the first sub-mounting bases A 61 are staggeredly disposed on a first side of the first toothed ring portion 10, and the first mounting bases A 50 and the second sub-mounting bases A 62 are staggeredly disposed on a second side of the first toothed ring portion 10, and the connection and installation positions of the first elastic portion 30 on both sides of the first toothed ring portion 10 are formed.

In a possible implementation, the first sub-mounting bases A 61 and the second sub-mounting bases A 62 are respectively provided with corresponding screw holes to detachably connect the first elastic portions 30 to the first mounting bases A 50 and the first sub-mounting bases A 61 as well as the first mounting bases A 50 and the second sub-mounting bases A 62.

In some possible embodiments of the present application, at least part of the first connecting units 23 are shear-resistant pins.

The present embodiment provides an implementation of the first connecting units 23. By configuring part of the first connecting unit 23 as shear-resistant pins, the stability of the connection between the first transmission connecting base 21 and the first transmission supporting base 22 is improved.

In a possible implementation, a part of the first connecting units 23 are connected threadedly to the first transmission connecting base 21 and the first transmission supporting base 22 respectively to detachably connect the first transmission connecting base 21 to the first transmission supporting base 22.

In a possible implementation, a part of the first connecting units 23 are insertedly matched with the first transmission connecting base 21 and the first transmission supporting base 22 respectively in an interference-fit or transition-fit form to provide the first transmission connecting base 21 and the first transmission supporting base 22 with shear resistance.

In some possible embodiments of the present application, each of the first elastic portions 30 includes: a first mounting plate A 31, a second mounting plate A 32 and a first elastomer 33. The first mounting plate A 31 and the second mounting plate A 32 are connected to form a mounting assembly which is L-shaped; two mounting assemblies are disposed at intervals and the first elastomer 33 is disposed between the two mounting assemblies. The first mounting plate A 31 is detachably connected to the first mounting bases A 50 or the second mounting bases A 60; and the second mounting plate A 32 is connected to the first elastomer 33.

The present embodiment provides an implementation of the first mounting plate A 31, the second mounting plate A 32 and the first elastomer 33. By disposing the first mounting plate A 31, the second mounting plate A 32 and the first elastomer 33, an annular elastic buffer structure composed of a plurality of first elastomers 33 is formed at a side of the first toothed ring portion 10.

Furthermore, by disposing the first mounting plate A 31 and the second mounting plate A 32, the first elastomers 33 are more conveniently disassembled and maintained. When a certain first elastomer 33 loses elasticity or is damaged, only the independent first elastomer 33 needs to be disassembled for maintenance and replacement, and the work efficiency is improved.

In a possible implementation, the first mounting plate A 31 is provided with corresponding through holes to correspond to the mounting holes on the first mounting bases A50 and the second mounting bases A60. The first mounting plate A 31 is connected to the first mounting bases A 50 or the second mounting bases A 60 through connectors such as screws and connecting pins.

In some possible embodiments of the present application, the first elastomer 33 is an elastic block made of rubber material.

The present embodiment provides an implementation of the first elastomer 33. By configuring the first elastomer 33 as an elastic block made of the rubber material, the capability of the traveling gear to transmit torque is improved, and at the same time, when the traveling gear is subjected to a certain eccentric load or impact, the eccentric load or impact can be effectively absorbed by the first elastomer 33.

In some specific embodiments of the application, the present application provides a bogie, including a frame 100, wheelsets 108, an axle 110 and the above-mentioned traveling gear structure for the rack vehicle. The axle 110 is connected to the frame 100; the wheelsets 108 are provided at both ends of the axle 110; the traveling gear structure is disposed between the two wheelsets 108 and connected to the axle 110.

In some possible embodiments of the present application, the bogie further includes: a first power box 70, a second support bracket 71, a first axle sleeve 77, a traveling gear and a first adjusting assembly 80, where the traveling gear is the above-mentioned traveling gear structure. The first power box 70 and the second support bracket 71 are disposed at intervals and the axle 110 penetrates through the first power box 70 and the second support bracket 71 in sequence. The wheelsets 108 are provided at both ends of the axle 110; the first axle sleeve 77 is sleeved outside the axle 110, penetrates through the second support bracket 71, and is matched rotatably with the second support bracket 71. The traveling gears are connected with the first axle sleeve 77 inside the second support bracket 71, and a part of the traveling gears stretches out of the second support bracket 71 along the radial direction of the first axle sleeve 77 to mesh with the rack provided on the ground. The first adjusting assembly 80 is rotatably sleeved outside the first axle sleeve 77 and connected with the second support bracket 71 to adjust the relative position between the traveling gears and the wheelsets 108.

The present embodiment provides an implementation of a drive device. By connecting the first adjusting assembly 80 to the first axle sleeve 77 and the second support bracket 71, a problem of matching the height of the traveling gears with the worn wheelset 108 after the wheelset 108 is worn is solved and unsprung mass is reduced, and it is easier to adjust the relative position between the traveling gear structure and the wheelset 108.

In some possible embodiments of the present application, the first adjusting assembly 80 includes: a first bearing A 81, a second bearing A 82 and a second eccentric wheel 83. The first bearing A 81 and the second bearing A 82 are disposed at intervals along the axial direction of the first axle sleeve 77. The second eccentric wheel 83 is matched with an inner ring of the first bearing A 81 and an outer ring of the second bearing A 82 respectively; where the outer ring of the first bearing A 81 is matched with the inner ring of the traveling gear structure; and the inner ring of the second bearing A 82 is matched with the first axle sleeve 77.

The present embodiment provides an implementation of the first bearing A81, the second bearing A 82 and the second eccentric wheel 83. By disposing the first bearing A 81, the second bearing A82 and the second eccentric wheel 83, the second eccentric wheel 83 is connected to the second support bracket 71 to reduce the unsprung mass.

Further, the second eccentric wheel 83 is disposed close to the traveling gear. By adjusting the second eccentric wheel 83 on one side, the relative position between the traveling gear and the wheelsets 108 can be adjusted, which solves the problem that the eccentric structure needs to be adjusted from both sides to adjust the relative position balance between the traveling gear and the wheelset 108 in the related art.

In a possible implementation, by disposing the first bearing A 81 and the second bearing A 82, the second eccentric wheel 83 can be connected rotatably to both the first axle sleeve 77 and the traveling gear.

In a possible implementation, the centers of circles of the traveling gear and the wheelset 108 can be first disposed at the same height, and a position of traveling gear relative to the wheelset 108 can be fixed through corresponding positioning structures. When the rack vehicle travels for a period of time, the wheelset 108 is worn, and the height of the traveling gear is also reduced simultaneously. However, the tooth top of the rack on the track will not be lowered relative to the rail surface. If the relative height between the traveling gear and the wheelset 108 is not adjusted, greater impact, vibration and noise problems will occur during driving, which results in greater safety risk in the long term. If the wheel needs to continue to be used, it is necessary to rotate the second eccentric wheel 83 at a certain angle and fix the angle through a corresponding structure while ensuring the normal meshing of the traveling gear and the rack on the ground. While the second eccentric wheel 83 rotates around the center of the first axle sleeve 77, it drives the traveling gear on the first axle sleeve 77 to rise relative to the wheelsets 108, and the height of the traveling gear relative to the wheelset 108 is changed. The wheelsets 108 can be used continuously, and the service life of the wheelset 108 can be prolonged by raising the traveling gear multiple times.

In a possible implementation, since the second eccentric wheel 83 is disposed close to the traveling gear, the height of the traveling gear can be adjusted through the second eccentric wheel 83 on one side, which avoids the problem that the second eccentric wheel 83 is simultaneously adjusted along both sides of the axle 110 to ensure the adjustment stability of the traveling gear in the related art.

In some possible embodiments of the present application, the first adjusting assembly 80 further includes: a first adjusting disc 84, the first adjusting disc 84 is connected to the second eccentric wheel 83 to adjust a steering of the second eccentric wheel 83 through the first adjusting disc 84.

The present embodiment provides an implementation of the first adjusting disc 84. By providing the first adjusting disc 84, the second eccentric wheel 83 is more conveniently adjusted.

In a possible implementation, an inner ring of the first adjusting disc 84 is provided with inner ring gears, and an outer ring of the second eccentric wheel 83 is provided with outer ring gears corresponding to the inner ring gears of the first adjusting disc 84. The first adjusting disc 84 is meshed with the second eccentric wheel 83 through the inner ring gears and outer ring gears. In practical applications, the rotation angle of the second eccentric wheel 83 can be adjusted by rotating the first adjusting disc 84.

In a possible implementation, the first adjusting disc 84 is provided with corresponding adjusting holes to conventionally adjusting the rotation angle of the first adjusting disc 84 through the adjusting holes.

In a possible implementation, the outer ring of the first adjusting disc 84 is provided with corresponding cogging to conventionally apply force from the circumferential direction of the first adjusting disc 84 for adjusting the rotation angle of the first adjusting disc 84.

In some possible embodiments of the present application, two first adjusting assemblies 80 are symmetrically disposed on both sides of the traveling gear along the axial direction of the first axle sleeve 77.

The present embodiment provides an implementation of setting the number of the first adjusting assemblies 80. By disposing the first adjusting assemblies 80 on both sides of the traveling gear, the second eccentric wheel 83 can be adjusted from either side.

In some possible embodiments of the present application, the bogie further includes: a first brake disc 47, a first brake cylinder 75 and a first brake caliper 76. The first brake disc 47 is connected to the axle 110 and is disposed between the second support bracket 71 and the wheelset 108. The first brake cylinder 75 is connected to the second support bracket 71 and the first brake caliper 76 is connected to the first brake cylinder 75 and is disposed corresponding to the first brake disc 47. The first brake cylinder 75 drives the first brake caliper 76 to move for enabling the first brake caliper 76 to clamp the first brake disc 47.

The present embodiment provides an implementation of the first brake disc 47, the first brake cylinder 75, and the first brake caliper 76 and the traveling gear is braked by providing the first brake disc 47, the first brake cylinder 75 and the first brake caliper 76.

In a possible implementation, the first brake cylinder 75 is connected to the second support bracket 71 to reduce the volume of the braking device and reduce the axial occupation space, the height of the first power box 70 and the second support bracket 71 and the braking device is used to solve the space limitation problem of narrow rails.

In a possible implementation, the first brake disc 47 is connected to the axle 110 to form a disc brake structure, which improves the reliability of braking.

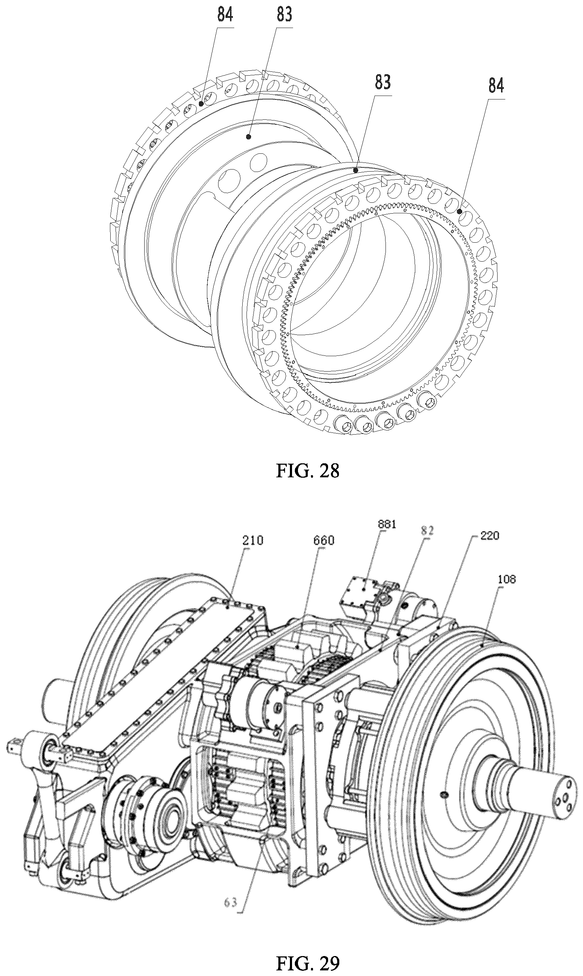

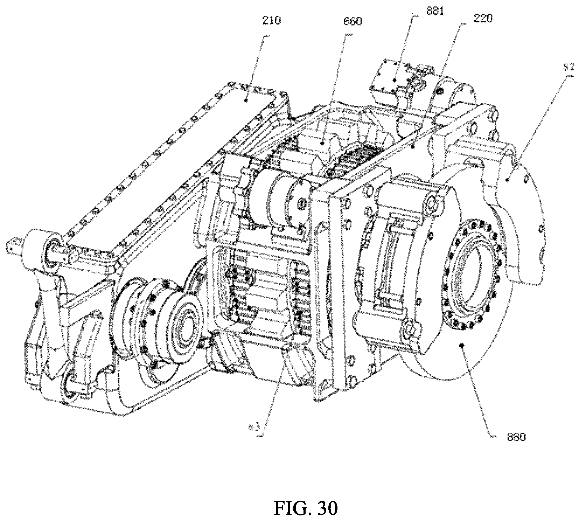

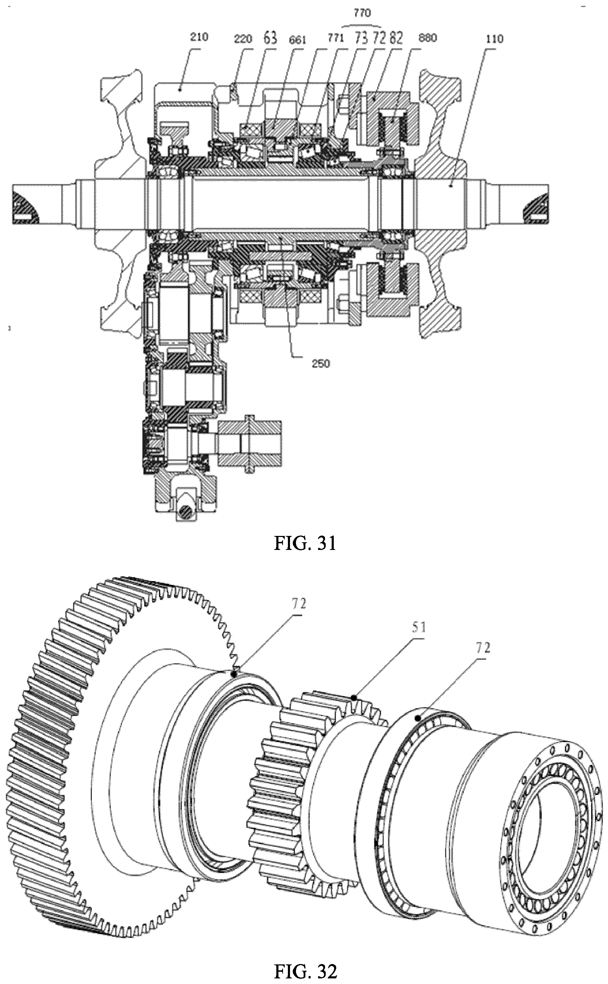

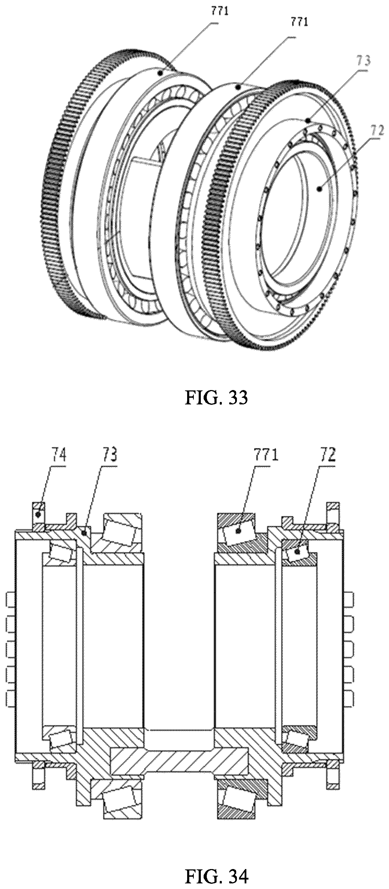

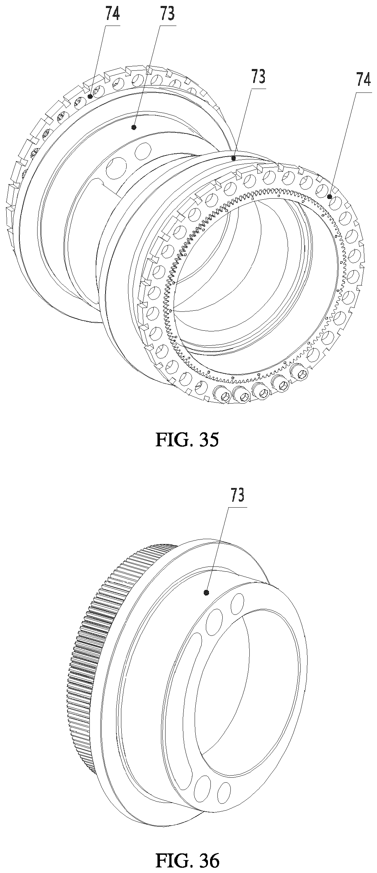

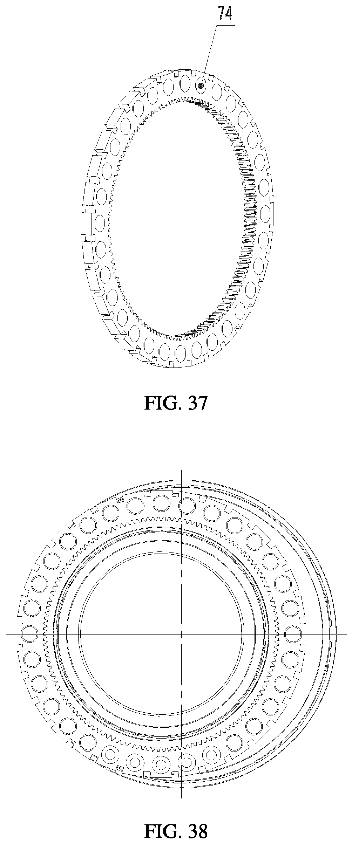

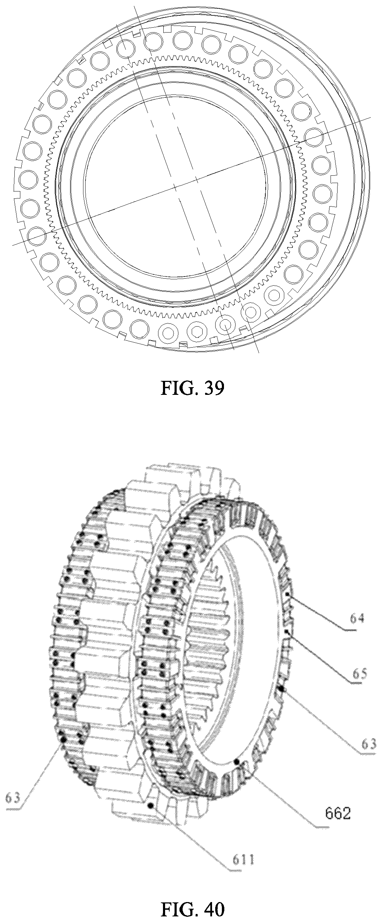

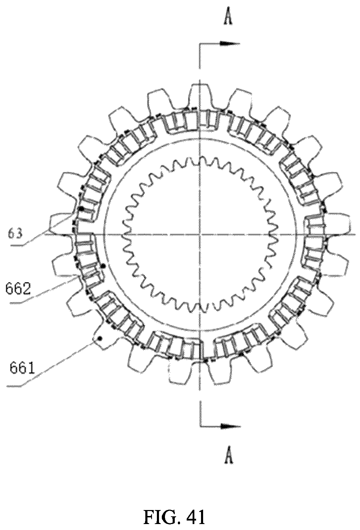

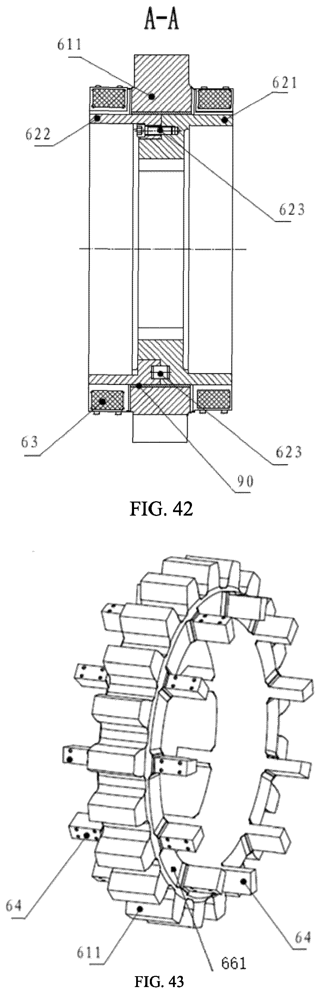

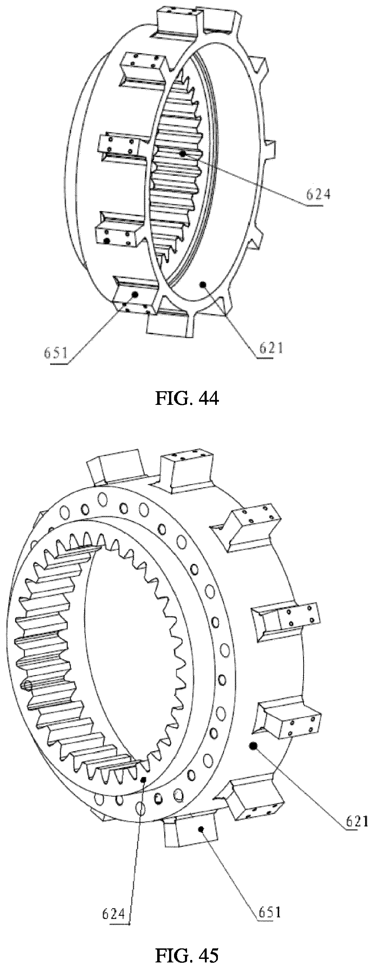

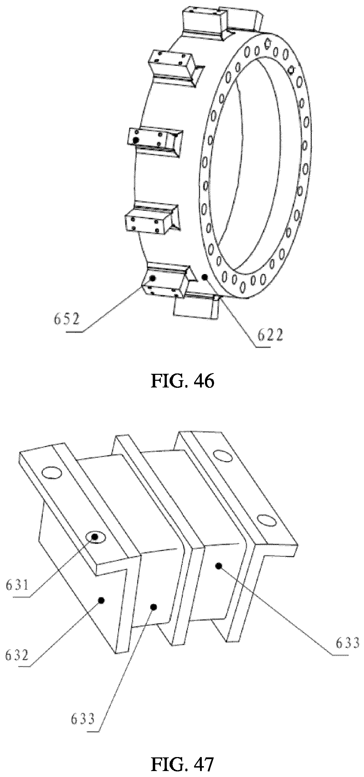

In some specific implementations of the present application, as shown in FIG. 29 to FIG. 47, the present application provides a drive device for a rack vehicle, including: a second power box 210, a support bracket 220, a second axle sleeve 250, a traveling gear 660 and a second adjusting assembly 770. The second power box 210 and the support bracket 220 are disposed at intervals; an axle 110 is provided between the second power box 210 and the support bracket 220, and wheelsets are provided at both ends of the axle 110. The second axle sleeve 250 is sleeved outside the axle 110, penetrates through the support bracket 220, and is rotatably matched with the support bracket 220. The traveling gear 660 is connected to the second axle sleeve 250 inside the support bracket 220, and a part of the traveling gears 660 extends out of the support bracket 220 along the radial direction of the second axle sleeve 250 to mesh with a rack provided on the ground. The second adjusting assembly 770 is rotatably sleeved outside the second axle sleeve 250 and connected with the support bracket 220 to adjust the relative position between the traveling gears 660 and the wheelset 108.

In detail, the present application provides the drive device for the rack vehicle to solve the defect that the worn wheelset 108 is unable to be meshed with the traveling gears 660 after the wheelset 108 is gradually worn with use and the wear of the wheelset 108 reaches a certain level since the meshing of the gear and the rack has strict center distance requirements due to the characteristics of gear and rack transmission. By connecting the second adjusting assembly 770 to the second axle sleeve 250 and the support bracket 220, the problem of matching the height of the traveling gear 660 and the worn wheelset 108 is solved, the unsprung mass is reduced at the same time, and it is easier to adjust the relative position between the traveling gears 660 and the wheelset 108.

In some possible embodiments of the present application, the second adjusting assembly 770 includes: a first bearing B 771, a second bearing B 72, and a third eccentric wheel 73. The first bearing B 771 and the second bearing B 72 are disposed at intervals along the axial direction of the second axle sleeve 250, and the third eccentric wheel 73 is matched with an inner ring of the first bearing B 771 and an outer ring of the second bearing B 72 respectively. an outer ring of the first bearing B 771 is matched with an inner ring of the traveling gear 660; and an inner ring of the second bearing B 72 is matched with the second axle sleeve 250.

The present embodiment provides an implementation of the first bearing B 771, the second bearing B 72, and the third eccentric wheel 73. By disposing the first bearing B 771, the second bearing B 72, and the third eccentric wheel 73, the third eccentric wheel 73 is connected to the support bracket 220, which reduces the unsprung mass.

Furthermore, the third eccentric wheel 73 is disposed close to the traveling gear 660. By adjusting the third eccentric wheel 73 on one side, the relative position between the traveling gear 660 and the wheelsets 108 can be adjusted, which solves the problem that the eccentric structure needs to be adjusted from both sides to adjust the relative position balance between the traveling gear 660 and the wheelset 108 in the related art.

In a possible implementation, by disposing the first bearing B 771 and the second bearing B 72, the third eccentric wheel 73 can be connected rotatably to both the second axle sleeve 250 and the traveling gear 660.

In a possible implementation, the centers of circles of the traveling gear 660 and the wheelset 108 can be first disposed at the same height, and a position of traveling gear 660 relative to the wheelset 108 can be fixed through corresponding positioning structures. When the rack vehicle travels for a period of time, the wheelset 108 wears, and the height of the traveling gear 660 is also reduced simultaneously. However, the tooth top of the rack on the track will not be lowered relative to the rail surface. If the relative height between the traveling gear 660 and the wheelset 108 is not adjusted, greater impact, vibration and noise problems will occur during driving, which results in greater safety risk in the long term. If the wheel needs to continue to be used, it is necessary to rotate the third eccentric wheel 73 at a certain angle and fix the angle through a corresponding structure while ensuring the normal meshing of the traveling gear 660 and the rack on the ground. While the third eccentric wheel 73 rotates around the center of the second axle sleeve 250, it drives the traveling gear 660 on the second axle sleeve 250 to rise relative to the wheelsets 108, and the height of the traveling gear 660 relative to the wheelsets 108 is changed. The wheelset 108 can be used continuously, and the service life of the wheelset 108 can be prolonged by raising the traveling gear 660 multiple times.

In a possible implementation, since the third eccentric wheel 73 is disposed close to the traveling gear 660, the height of the traveling gear 660 can be adjusted through the third eccentric wheel 73 on one side, which avoids the problem that the third eccentric wheel 73 is simultaneously adjusted along both sides of the axle 110 to ensure the adjustment stability of the traveling gear 660 in the related art.

In some possible embodiments of the present application, the second adjusting assembly 770 further includes: a second adjusting disc 74, the second adjusting disc 74 is connected to the third eccentric wheel 73 to adjust a steering of the third eccentric wheel 73 through the second adjusting disc 74.

The present embodiment provides an implementation of the second adjusting disc 74. By providing the second adjusting disc 74, the third eccentric wheel 73 is more conveniently adjusted.

In a possible implementation, an inner ring of the second adjusting disc 74 is provided with inner ring gears, and an outer ring of the third eccentric wheel 73 is provided with outer ring gears corresponding to the inner ring gears of the second adjusting disc 74. The second adjusting disc 74 is meshed with the third eccentric wheel 73 through the inner ring gears and outer ring gears. In practical applications, the rotation angle of the third eccentric wheel 73 can be adjusted by rotating the second adjusting disc 74.

In a possible implementation, the second adjusting disc 74 is provided with corresponding adjusting holes to conventionally adjusting the rotation angle of the second adjusting disc 74 through the adjusting holes.

In a possible implementation, the outer ring of the second adjusting disc 74 is provided with corresponding cogging to conventionally apply force from the circumferential direction of the second adjusting disc 74 for adjusting the rotation angle of the second adjusting disc 74.

In some possible embodiments of the present application, two second adjusting assemblies 770 are symmetrically disposed on both sides of the traveling gear 660 along the axial direction of the second axle sleeve 250.

The present embodiment provides an implementation in which the number of second adjusting assemblies 770 is set. By disposing the second adjusting assemblies 770 on both sides of the traveling gear 660, the second eccentric wheel 83 can be adjusted from either side.

In some possible embodiments of the present application, the drive device further includes: a second brake disc 880, a second brake cylinder 881 and a second brake caliper 882. The second brake disc 880 is connected to the axle 110 and is disposed between the support frame 220 and the wheelset 108. The second brake cylinder 881 is connected to the support bracket 220; and the second brake caliper 882 is connected to the second brake cylinder 881 and is disposed corresponding to the second brake disc 880. The second brake cylinder 881 drives the second brake caliper 882 to move for enabling the second brake caliper 882 to clamp the second brake disc 880.

The present embodiment provides an implementation of the second brake disc 880, the second brake cylinder 881 and the second brake caliper 882, and the traveling gear 660 is braked by providing the second brake disc 880, the second brake cylinder 881 and the second brake clamp 882.

In a possible implementation, the second brake cylinder 881 is connected to the support bracket 220 to reduce the volume of the braking device and reduce the axial occupation space, the height of the second power box 210 and the support bracket 220 and the braking device is used to solve the space limitation problem of narrow rails.

In a possible implementation, the second brake disc 880 is connected to the axle 110 to form a disc brake structure, which improves the reliability of braking.

In some possible embodiments of the present application, the traveling gear 660 includes: a second toothed ring portion 661, a second transmission portion 662 and a plurality of second elastic portions 63; an outer ring of the second toothed ring portion 661 is provided with second outer gear teeth 611, and the second outer gear teeth 611 are meshed with a rack; an outer ring of the second transmission portion 662 is matched with an inner ring of the second toothed ring portion 661; inner ring gears of the second transmission portion 662 are meshed with a second transmission gear 51 on the second axle sleeve 250; the plurality of second elastic portions 63 are evenly distributed on the side of the second toothed ring portion 661 along the circumferential direction, and are respectively connected to the second toothed ring portion 661 and the second transmission portion 662.

The present embodiment provides an implementation of the second toothed ring portion 661, the second transmission portion 662 and the second elastic portions 63. By adding an annularly disposed second elastic portions 63 to the side of the second toothed ring portion 661, the problem of vibration and impact caused by unstable meshing during the driving of the rack vehicle is solved, and the hazards to the equipment on the vehicle caused by the vibration is avoided and ride comfort is improved.

In a possible implementation, the plurality of second elastic portions 63 form an elastic assembly along the circumferential direction of the second toothed ring portion 661; the two elastic assemblies are symmetrically disposed on both sides of the second toothed ring portion 661 along the axial direction.

It should be noted that by disposing the second elastic portions 63 symmetrically on both sides of the second toothed ring portion 661 along the axial direction of the second axle sleeve 250, and disposing the plurality of second elastic portions 63 annularly, the capability of the traveling gear 660 to transmit torque is improved while an eccentric load of the traveling gear 660 is decreased, and the impact of the gear meshing process is reduced, a large torque of the traveling gear 660 is transmitted and needs of the rack vehicle are satisfied.

In a possible implementation, disposing the second elastic portions 63 increases the damping of the traveling gear 660, reduces noise caused by meshing between the gear and the rack, reduces the vibration experienced by the rack vehicle during driving, and improves the riding comfort.

In a possible implementation, the two groups of elastic assemblies are symmetrically disposed, which solves the need for the traveling gear 660 to transmit very high torque when the rack vehicle runs on a large slope.

In a possible implementation, each elastic assembly includes a plurality of second elastic portions 63 disposed annularly. This arrangement improves the uniformity of the load and impacts and vibrations experienced by the traveling gears 660 can be absorbed well.

In a possible implementation, an elastic assembly composed of a plurality of second elastic portions 63 is disposed on the side of the second toothed ring portion 661, radial space is freed and a larger transmission structure is connected internally, which improves the performance of a transmission system.

In a possible implementation, the drive device further includes a third bushing 90. The third bushing 90 is disposed between the inner ring of the second toothed ring portion 661 and the outer ring of the second transmission portion 662 to decrease a friction coefficient between the second toothed ring portion 661 and the second transmission portion 662. The third bushing 90 is disposed to decrease the friction coefficient and solve the friction problem caused by relative displacement between the second toothed ring portion 661 and the second transmission portion 662.

In a possible implementation, the third bushing 90 is made of a self-lubricating material.

In a possible implementation, the third bushing 90 is made of a carbon-based material.

In a possible implementation, the third bushing 90 is a self-lubricating bushing.

In some possible embodiments of the present application, the traveling gear 660 further includes: a plurality of first mounting bases B 64 and a plurality of second mounting bases B 65. The first mounting bases B 64 are evenly distributed on a side of the second toothed ring portion 661 along the circumferential direction; the second mounting bases B 65 are evenly distributed on the outer ring of the second transmission portion 662 along the circumferential direction, and the first mounting bases B 64 and the second mounting bases B 65 are disposed staggeredly. The second elastic portions 63 are detachably connected to the adjacent first mounting base B 64 and second mounting base B 65 respectively.

The present embodiment provides an implementation of the first mounting bases B 64 and the second mounting bases B 65. By disposing the first mounting bases B 64 and the second mounting bases B 65, the second elastic portions 63 are mounted and positioned at the side of the second toothed ring portion 10.

In a possible implementation, the first mounting bases B 64 and the second mounting bases B65 are disposed staggeredly on the side of the second toothed ring portion 661, and the first mounting bases B 64 and the second mounting bases B 65 are provided with corresponding mounting holes. The second elastic portions 63 are respectively connected to the first mounting base B 64 and the second mounting base B 65 through screws or other connecting components.

In a possible implementation, when the second toothed ring portion 661 is impacted during the operation of the traveling gear 660, and the second elastic portion 63 provided in the first mounting bases A50 and the second mounting bases A60 are deformed to absorb impact and vibration.

In some possible embodiments of the present application, the second transmission portion 662 includes: a second transmission connecting base 621, a second transmission supporting base 622 and a plurality of second connecting units 623. A second boss 624 is provided on a first side of the second transmission connecting base 621 and an inner ring of the second boss 624 is provided with inner ring gears that are meshed with the second transmission gear 51. The second transmission supporting base 622 is insertedly matched with the second transmission connecting base 621 through the second boss 624. The plurality of second connecting units 623 are provided on a matching surface of the second transmission connecting base 621 and the second transmission supporting base 622 to detachably connect the second transmission connecting base 621 and the second transmission supporting base 622. The plurality of second mounting bases B 65 are evenly distributed on the outer rings of the second transmission connecting base 621 and the first transmission supporting base 622 along the circumferential direction.

The present embodiment provides an implementation of the second transmission connecting base 621, the second transmission supporting base 622 and the second connecting units 623. By disposing the second transmission connecting base 621, the second transmission supporting base 622 and the second connecting units 623, the second transmission portion 662 is more conveniently connected to the second toothed ring portion 661.

It should be noted that the second toothed ring portion 661 and the second transmission portion 662 are connected through the second elastic portions 63.

Furthermore, the inner ring gears provided on the inner ring of the second boss 624 is meshed with the second transmission gear 51 to provide the transmission connection between the traveling gear 660 and the second axle sleeve 250, which facilitates the installation and removal of the traveling gear 660.

In a possible implementation, the matching surface of second transmission connecting base 621 and the second transmission supporting base 622 is provided with corresponding mounting holes or screw holes, and the connectors are matched with the mounting holes or screw holes to connect the second transmission connecting base 621 to the second transmission supporting base 622. For simplicity, the present application does not describe the connection in too much detail. Please refer to the accompanying drawings and settings in related fields.

In some possible embodiments of this application, each of the second mounting bases B65 includes: a first sub-mounting base B 651 and a second sub-mounting base B 652. The plurality of first sub-mounting bases B651 are evenly distributed circumferentially on the outer ring of the second transmission connecting base 621, and are disposed close to a second side of the second transmission connecting base 621 relative to the second boss 624; the plurality of second sub-mounting base B 652 are evenly distributed circumferentially on the outer ring of the second transmission supporting base 622 and are disposed close to a side of the second transmission supporting base 622 away from the second transmission connecting base 621.

The present embodiment provides an implementation of the first sub-mounting base B 651 and the second sub-mounting base B 652. By disposing the plurality of first sub-mounting bases B 651 on the side of the second transmission connecting base 621, and disposing a plurality of second sub-mounting base B 652 circumferentially on the side of the second transmission supporting base 622, the second elastic portions 63 are disposed on both sides of the second toothed ring portion 661.

It should be noted that the first mounting base B 64 and the first sub-mounting base B 651 are staggeredly disposed on a first side of the second toothed ring portion 661, and the first mounting base B 64 and the second sub-mounting base B652 are staggeredly disposed on a second side of the second toothed ring portion 661, and connection and installation positions of the second elastic portions 63 on both sides of the second toothed ring portion 661 are formed.

In a possible implementation, the first sub-mounting base B 651 and the second sub-mounting base B 652 are respectively provided with corresponding screw holes to detachably connect the second elastic portions 63 and the first mounting base B64, the first sub-mounting base B651, the first mounting base B 64 and second sub-mounting base B 652 adjacent to the second elastic portions 63.

In a possible implementation, at least part of the second connecting units 623 are shear-resistant pins. By disposing a part of the second connecting units 623 as shear-resistant pins, the stability of the connection between the second transmission connecting base 621 and the second transmission supporting base 622 is improved.

In a possible implementation, a part of the second connecting units 623 are connected threadedly to the second transmission connecting base 621 and the second transmission supporting base 622 respectively, to detachably connect the second transmission connecting base 621 and the second transmission supporting base 622.

In a possible implementation, a part of the second connecting units 623 are insertedly matched with the second transmission connecting base 621 and the second transmission supporting base 622 respectively in an interference-fit or transition fit form to provide second transmission connecting base 621 and the second transmission supporting base 622 with shear resistance.

In some possible embodiments of the present application, each of the second elastic portions 63 includes: a first mounting plate B 631, a second mounting plate B 632 and a second elastomer 633. The first mounting plate B 631 and the second mounting plate B 632 are connected to form a mounting assembly which is L-shaped; two mounting assemblies are disposed at intervals and the second elastomer 633 is disposed between the two mounting assemblies. The first mounting plate B 631 is detachably connected to the first mounting bases B 64 or the second mounting bases B 65; the second mounting plate B 632 is connected to the second elastomer 633.

The present embodiment provides an implementation of the first mounting plate B 631, the second mounting plate B 632 and the second elastomer 633. By disposing the first mounting plate B 631, the second mounting plate B 632 and the second elastomer 633, an annular elastic buffer structure composed of a plurality of second elastomers 633 is formed at a side of the second toothed ring portion 661.

Furthermore, by disposing the first mounting plate B 631 and the second mounting plate B 632, the second elastomers 633 are more conveniently disassembled and maintained. When a certain second elastomer 633 loses elasticity or is damaged, only the independent second elastomer 633 needs to be disassembled for maintenance and replacement, and the work efficiency is improved.

In a possible implementation, the first mounting plate B 631 is provided with corresponding through holes to correspond to the mounting holes on the first mounting base B 64 and the second mounting base B 65. The first mounting plate B 631 is connected to the first mounting bases B 64 or the second mounting bases B 65 through connectors such as screws and connecting pins.

In some possible embodiments of the present application, the second elastomer 633 is an elastic block made of rubber material.

The present embodiment provides an implementation of the second elastomer 633. By disposing the second elastomer 633 as an elastic block made of rubber material, the capability of the traveling gear 660 to transmit torque is improved, and at the same time, when the traveling gear 660 is subjected to a certain eccentric load or impact, the eccentric load or impact can be effectively absorbed by the second elastomer 633.

It should be noted that the above embodiments are only used to explain the solutions of the present application, and are not limited thereto. Accordingly, the invention is not to be seen as limited by the foregoing description, but is only limited by the scope of the appended claims.

## Claims

1. A bogie, comprising:
a frame (100), including a pair of side beams (102), a pair of cross beams (104) and a pair of end beams (106), wherein both ends of the pair of cross beams (104) are respectively connected between the pair of side beams (102), and the pair of end beams (106) are respectively connected to both ends of the pair of side beams (102);
two wheelsets (108), rotatably mounted on the frame (100) through axles (110) and respectively located in an area surrounded by the end beams (106), cross beams (104) adjacent to the end beams (106) and the pair of side beams (102);
a pair of traveling gears (109), respectively mounted on the axle (110) through an eccentric device and disposed along a longitudinal axis of the frame (100); and
a pair of drive members (112), respectively mounted on the cross beams (104), and respectively in transmission connection with the pair of traveling gears (109) through transmission devices (111), wherein the transmission devices (111) are respectively provided on sides away from the pair of traveling gears (109) along a transverse direction of the frame (100);
the eccentric device comprises:
a first support bearing (114), having an inner ring sleeved on the axle (110);
a first eccentric wheel (116), sleeved on an outer ring of the first support bearing (114) and eccentrically provided with respect to the axle (110), wherein a position of the first eccentric wheel (116) relative to the first support bearing (114) is locked through a locking mechanism; and
a second support bearing (118), having an inner ring sleeved outside the first eccentric wheel (116), wherein the traveling gears (109) sleeve an outer ring of the second support bearing (118);
**characterized in that**,
the bogie further comprises a first support bracket (120) mounted on the frame (100), mounting holes (122) for mounting the first support bearing (114) are provided on the first support bracket (120) and a plurality of first positioning holes (124) are provided on an end surface of the mounting hole (122) along a circumferential direction of the mounting hole (122);
the locking mechanism comprises:
an adjusting ring (126), connected to an outer circumference of the first eccentric wheel (116), wherein a plurality of second positioning holes (128) are provided on an end surface of the adjusting ring (126) along a circumferential direction of the adjusting ring (126); and
a locking member (130), penetrating through the first positioning holes (124) and the second positioning holes (128) to lock a position of the first eccentric wheel (116) relative to the first support bracket (120).

2. The bogie of claim 1, wherein a first bushing (132) is further sleeved on the outer circumference of the first eccentric wheel (116), and the first bushing (132) is configured to reduce friction between an outer circumference of the first eccentric wheel (116) and an inner wall of the mounting hole (122);
wherein the number of the first eccentric wheel (116) is two, and a synchronization block (134) is provided between the two first eccentric wheels (116).

3. The bogie of claim 1 or 2, further comprising a secondary damping device, wherein the secondary damping device comprises a bottom plate (136) connected to a top of the side beams (102) and an air spring (138) mounted on the bottom plate (136), and the air spring (138) is conical in a direction from the bottom plate (136) away from the side beams (102).

4. The bogie of claim 1 or 2, further comprising an anti-roll device mounted on each of the side beams (102),
wherein the anti-roll device comprises:
a bearing seat (140), mounted at a bottom of each of the side beams (102);
a torsion bar shaft, mounted in the bearing seat (140); and
an anti-roll torsion bar (142), connected between the torsion bar shaft and a vehicle body, wherein a ball hinge structure (144) is provided at an end of the anti-roll torsion bar (142) connected to the vehicle body.

5. The bogie of claim 1 or 2, further comprising a first braking device and a second braking device (150),
wherein the first braking device comprises:
a mounting bracket (146), mounted on the side beams (102);
brake shoes (148), provided on the mounting bracket (146) and opposite to a tread of the wheelsets (108);
the second braking device (150) comprises:
a brake disc, disposed coaxially with each of the wheelsets (108);
two friction rings, respectively provided on opposite sides of the wheelset, wherein a heat dissipation structure is provided between the two friction rings; and
a brake cylinder, provided on the side beam and driving the two friction rings to move relative to the brake disc.

6. A rack vehicle, comprising the bogie of any one of claims 1 to 5.

7. The rack vehicle of claim 6, further comprising a traveling gear structure of the rack vehicle;
the traveling gear structure comprises a first toothed ring portion (10), a first transmission portion (20) and a plurality of first elastic portions (30);
wherein an outer ring of the first toothed ring portion (10) is provided with first outer gear teeth (11), and the first outer gear teeth (11) are meshed with a rack provided on the ground;
an outer ring of the first transmission portion (20) is matched with an inner ring of the first toothed ring portion (10); and
the plurality of first elastic portions (30) are evenly distributed on the side of the first toothed ring portion (10) along the circumferential direction, and are respectively connected to the first toothed ring portion (10) and the first transmission portion (20).

8. The rack vehicle of claim 7, wherein the plurality of first elastic portions (30) form an elastic assembly along the circumferential direction of the first toothed ring portion (10); and
two elastic assemblies are symmetrically disposed on both sides of the first toothed ring portion (10) along an axial direction.

9. The rack vehicle of claim 7, further comprising: a second bushing (40), wherein the second bushing (40) is disposed between the inner ring of the first toothed ring portion (10) and the outer ring of the first transmission portion (20) to decrease a friction coefficient between the first toothed ring portion (10) and the first transmission portion (20).

10. The rack vehicle of claim 7, further comprising: a plurality of first mounting bases A (50) and a plurality of second mounting bases A (60);
the first mounting bases A (50) are evenly distributed on the side of the first toothed ring portion (10) along the circumferential direction;
the second mounting bases A (60) are evenly distributed on the outer ring of the first transmission portion (20) along the circumferential direction, and the first mounting bases A (50) and the second mounting bases A (60) are disposed staggeredly; and
the first elastic portions (30) are detachably connected to the adjacent first mounting bases A (50) and the second mounting bases A (60), respectively.

11. The rack vehicle of claim 10, wherein the first transmission portion (20) comprises: a first transmission connecting base (21), a first transmission supporting base (22) and a plurality of first connecting units (23);
a first boss (24) is provided on a first side of the first transmission connecting base (21), and an inner ring of the first boss (24) is provided with inner ring gears;
the first transmission supporting base (22) is insertedly matched with the first transmission connecting base (21) through the first boss (24);
the plurality of first connecting units (23) are provided on a matching surface of the first transmission connecting base (21) and the first transmission supporting base (22) to detachably connect the first transmission connecting base (21) and the first transmission supporting base (22); and
the plurality of second mounting bases A (60) are evenly distributed on the outer rings of the first transmission connecting base (21) and the first transmission supporting base (22) along the circumferential direction.

12. The rack vehicle of claim 11, wherein each of the second mounting bases A (60) comprises: a first sub-mounting bases A (61) and a second sub-mounting bases A (62);
the first sub-mounting bases A (61) are evenly distributed circumferentially on the outer ring of the first transmission connecting base (21), and are disposed close to a second side of the first transmission connecting base (21) relative to the first boss (24); and
the plurality of second sub-mounting bases A (62) are evenly distributed circumferentially on the outer ring of the first transmission supporting base (22), and are disposed close to a first side of the first transmission supporting base (22) away from the first transmission connecting base (21).

13. The rack vehicle of any one of claims 10 to 12, wherein each of the first elastic portions (30) comprises: a first mounting plate A (31), a second mounting plate A (32) and a first elastomer (33);
the first mounting plate A (31) and the second mounting plate A (32) are connected to form a mounting assembly which is L-shaped;
two mounting assemblies are disposed at intervals;
the first elastomer (33) is disposed between the two mounting assemblies;
the first mounting plate A (31) is detachably connected to the first mounting bases A (50) or the second mounting bases A (60); and
the second mounting plate A (32) is connected to the first elastomer (33).

14. The rack vehicle of claim 6, further comprising a drive device for the rack vehicle;
wherein the drive device comprises a second power box (210), a support bracket (220), a second axle sleeve (250), and a second adjusting assembly (770);
the second power box (210) and the support bracket (220) are disposed at intervals;
the axle (110) is provided between the second power box (210) and the support bracket (220);
the second axle sleeve (250) is sleeved outside the axle (110), penetrates through the support bracket (220), and is rotatably matched with the support bracket (220);
the traveling gears (109) are connected to the second axle sleeve (250) inside the support bracket (220), and a part of the traveling gears (109) extends out of the support bracket (220) along the radial direction of the second axle sleeve (250) to mesh with a rack provided on the ground; and
the second adjusting assembly (770) is rotatably sleeved outside the second axle sleeve (250) and connected with the support bracket (220) to adjust the relative position between the traveling gears (109) and the wheelset (108);
wherein the second adjusting assembly (770) comprises: a first bearing B (771), a second bearing B (72) and a third eccentric wheel (73);
the first bearing B (771) and the second bearing B (72) are disposed at intervals along the axial direction of the second axle sleeve (250);
the third eccentric wheel (73) is matched with an inner ring of the first bearing B (72) and an outer ring of the second bearing B (72) respectively;
an outer ring of the first bearing B (771) is matched with an inner ring of the traveling gear; and
an inner ring of the second bearing B (72) is matched with the second axle sleeve (250).

15. The rack vehicle of claim 14, wherein the second adjusting assembly (770) further comprises: a second adjusting disc (74), the second adjusting disc (74) is connected to the third eccentric wheel (73) to adjust a steering of the third eccentric wheel (73) through the second adjusting disc (74).

16. The rack vehicle of claim 14, wherein the two second adjusting assemblies are symmetrically disposed on both sides of the traveling gear along the axial direction of the second axle sleeve (250).

17. The rack vehicle of claim 14, further comprising: a second brake disc (880), a second brake cylinder (881) and a second brake caliper (882);
the second brake disc (880) is connected to the axle (110) and is disposed between the support bracket (220) and the wheelsets (108);
the second brake cylinder (881) is connected to the support bracket (220);
the second brake caliper (882) is connected to the second brake cylinder (881) and is disposed corresponding to the second brake disc (880); and
the second brake cylinder (881) drives the second brake caliper (882) to make the second brake caliper (882) clamp the second brake disc (880).

18. The rack vehicle of any one of claims 14 to 17, wherein the traveling gear comprises:
a second toothed ring portion (661), a second transmission portion (662) and a plurality of second elastic portions (663);
an outer ring of the second toothed ring portion (661) is provided with second outer gear teeth, and the second outer gear teeth are meshed with the rack;
an outer ring of the second transmission portion (662) is matched with an inner ring of the second toothed ring portion (661), and inner ring gears of the second transmission portion (662) are meshed with a second transmission gear (51) on the second axle sleeve (250); and
the plurality of second elastic portions (663) are evenly distributed on the side of the second toothed ring portion (661) along the circumferential direction, and are respectively connected to the second toothed ring portion (661) and the second transmission portion (662).

## Patentansprüche

1. Drehgestell, aufweisend:
einen Rahmen (100), der ein Paar Seitenträger (102), ein Paar Querträger (104) und ein Paar Endträger (106) aufweist, wobei beide Enden des Paars Querträger (104) jeweils zwischen dem Paar Seitenträger (102) verbunden sind und das Paar Endträger (106) jeweils mit beiden Enden des Paars Seitenträger (102) verbunden ist;
zwei Radsätze (108), die drehbar an dem Rahmen (100) durch Achsen (110) montiert sind und jeweils in einem Bereich angeordnet sind, der von den Endträgern (106), Querträgern (104) benachbart zu den Endträgern (106) und dem Paar Seitenträger (102) umgeben ist;
ein Paar Fahrantriebsräder (109), die jeweils an der Achse (110) durch eine exzentrische Vorrichtung montiert sind und entlang einer Längsachse des Rahmens (100) angeordnet sind; und
ein Paar Antriebselemente (112), die jeweils an den Querträgern (104) montiert sind und jeweils in Übertragungsverbindung mit dem Paar Fahrantriebsräder (109) durch Übertragungsvorrichtungen (111) stehen, wobei die Übertragungsvorrichtungen (111) jeweils an Seiten weg von dem Paar Fahrantriebsräder (109) entlang einer Querrichtung des Rahmens (100) vorgesehen sind;
wobei die exzentrische Vorrichtung aufweist:
ein erstes Stützlager (114), das einen Innenring aufweist, der auf die Achse (110) aufgeschoben ist;
ein erstes exzentrisches Rad (116), das auf einen Außenring des ersten Stützlagers (114) aufgeschoben ist und exzentrisch in Bezug auf die Achse (110) vorgesehen ist, wobei eine Position des ersten exzentrischen Rads (116) relativ zu dem ersten Stützlager (114) durch einen Verriegelungsmechanismus verriegelt ist; und
ein zweites Stützlager (118), das einen Innenring aufweist, der außerhalb des ersten exzentrischen Rads (116) aufgeschoben ist, wobei die Fahrantriebsräder (109) einen Außenring des zweiten Stützlagers (118) aufschieben;
**dadurch gekennzeichnet, dass**
das Drehgestell ferner eine erste Stützhalterung (120) aufweist, die an dem Rahmen (100) montiert ist, wobei Montagelöcher (122) zum Montieren des ersten Stützlagers (114) an der ersten Stützhalterung (120) vorgesehen sind und eine Vielzahl von ersten Positionierungslöchern (124) an einer Endfläche des Montagelochs (122) entlang einer Umfangsrichtung des Montagelochs (122) vorgesehen sind;
der Verriegelungsmechanismus aufweist:
einen Einstellring (126), der mit einem Außenumfang des ersten exzentrischen Rads (116) verbunden ist, wobei eine Vielzahl von zweiten Positionierungslöchern (128) an einer Endfläche des Einstellrings (126) entlang einer Umfangsrichtung des Einstellrings (126) vorgesehen sind; und
ein Verriegelungselement (130), das die ersten Positionierungslöcher (124) und die zweiten Positionierungslöcher (128) durchdringt, um eine Position des ersten exzentrischen Rads (116) relativ zu der ersten Stützhalterung (120) zu verriegeln.

2. Drehgestell nach Anspruch 1, wobei eine erste Buchse (132) ferner auf den Außenumfang des ersten exzentrischen Rads (116) aufgeschoben ist und die erste Buchse (132) konfiguriert ist, um eine Reibung zwischen einem Außenumfang des ersten exzentrischen Rads (116) und einer Innenwand des Montagelochs (122) zu verringern;
wobei die Anzahl des ersten exzentrischen Rads (116) zwei beträgt und ein Synchronisationsblock (134) zwischen den zwei ersten exzentrischen Rädern (116) vorgesehen ist.

3. Drehgestell nach Anspruch 1 oder 2, ferner aufweisend eine sekundäre Dämpfungsvorrichtung, wobei die sekundäre Dämpfungsvorrichtung eine Bodenplatte (136), die mit einer Oberseite der Seitenträger (102) verbunden ist, und eine Luftfeder (138) aufweist, die an der Bodenplatte (136) montiert ist, und die Luftfeder (138) in einer Richtung von der Bodenplatte (136) weg von den Seitenträgern (102) konisch ist.

4. Drehgestell nach Anspruch 1 oder 2, ferner aufweisend eine Antirollvorrichtung, die an jedem der Seitenträger (102) montiert ist,
wobei die Antirollvorrichtung aufweist:
einen Lagersitz (140), der an einer Unterseite jedes der Seitenträger (102) montiert ist;
eine Torsionsstabwelle, die in dem Lagersitz (140) montiert ist; und
einen Antirolltorsionsstab (142), der zwischen der Torsionsstabwelle und einer Fahrzeugkarosserie verbunden ist, wobei eine Kugelgelenkstruktur (144) an einem Ende des Antirolltorsionsstabs (142) vorgesehen ist, der mit der Fahrzeugkarosserie verbunden ist.

5. Drehgestell nach Anspruch 1 oder 2, ferner aufweisend eine erste Bremsvorrichtung und eine zweite Bremsvorrichtung (150),
wobei die erste Bremsvorrichtung aufweist:
eine Montagehalterung (146), die an den Seitenträgern (102) montiert ist;
Bremsbacken (148), die an der Montagehalterung (146) und gegenüber einer Lauffläche der Radsätze (108) vorgesehen sind;
wobei die zweite Bremsvorrichtung (150) aufweist:
eine Bremsscheibe, die koaxial mit jedem der Radsätze (108) angeordnet ist;
zwei Reibringe, die jeweils an gegenüberliegenden Seiten des Radsatzes vorgesehen sind, wobei eine Wärmeableitungsstruktur zwischen den zwei Reibringen vorgesehen ist; und
einen Bremszylinder, der an dem Seitenträger vorgesehen ist und die zwei Reibringe antreibt, um sich relativ zu der Bremsscheibe zu bewegen.

6. Zahnstangenfahrzeug, aufweisend das Drehgestell nach einem der Ansprüche 1 bis 5.

7. Zahnstangenfahrzeug nach Anspruch 6, ferner aufweisend eine Fahrwerkstruktur des Zahnstangenfahrzeugs;
wobei die Fahrwerkstruktur einen ersten gezahnten Ringabschnitt (10), einen ersten Übertragungsabschnitt (20) und eine Vielzahl von ersten elastischen Abschnitten (30) aufweist;
wobei ein Außenring des ersten gezahnten Ringabschnitts (10) mit ersten äußeren Zahnradzähnen (11) versehen ist und die ersten äußeren Zahnradzähne (11) mit einer auf dem Boden bereitgestellten Zahnstange in Eingriff stehen;
ein Außenring des ersten Übertragungsabschnitts (20) mit einem Innenring des ersten gezahnten Ringabschnitts (10) zusammenpasst; und
die Vielzahl von ersten elastischen Abschnitten (30) gleichmäßig auf der Seite des ersten gezahnten Ringabschnitts (10) entlang der Umfangsrichtung verteilt sind und jeweils mit dem ersten gezahnten Ringabschnitt (10) und dem ersten Übertragungsabschnitt (20) verbunden sind.

8. Zahnstangenfahrzeug nach Anspruch 7, wobei die Vielzahl von ersten elastischen Abschnitten (30) eine elastische Anordnung entlang der Umfangsrichtung des ersten gezahnten Ringabschnitts (10) bilden; und
zwei elastische Anordnungen symmetrisch auf beiden Seiten des ersten gezahnten Ringabschnitts (10) entlang einer axialen Richtung angeordnet sind.

9. Zahnstangenfahrzeug nach Anspruch 7, ferner aufweisend: eine zweite Buchse (40), wobei die zweite Buchse (40) zwischen dem Innenring des ersten gezahnten Ringabschnitts (10) und dem Außenring des ersten Übertragungsabschnitts (20) angeordnet ist, um einen Reibungskoeffizienten zwischen dem ersten gezahnten Ringabschnitt (10) und dem ersten Übertragungsabschnitt (20) zu verringern.

10. Zahnstangenfahrzeug nach Anspruch 7, ferner aufweisend: eine Vielzahl von ersten Montagebasen A (50) und eine Vielzahl von zweiten Montagebasen A (60);
die ersten Montagebasen A (50) gleichmäßig auf der Seite des ersten gezahnten Ringabschnitts (10) entlang der Umfangsrichtung verteilt sind;
die zweiten Montagebasen A (60) gleichmäßig auf dem Außenring des ersten Übertragungsabschnitts (20) entlang der Umfangsrichtung verteilt sind und die ersten Montagebasen A (50) und die zweiten Montagebasen A (60) versetzt angeordnet sind; und
die ersten elastischen Abschnitte (30) jeweils mit den benachbarten ersten Montagebasen A (50) und den zweiten Montagebasen A (60) lösbar verbunden sind.

11. Zahnstangenfahrzeug nach Anspruch 10, wobei der erste Übertragungsabschnitt (20) aufweist: eine erste Übertragungsverbindungsbasis (21), eine erste Übertragungsstützbasis (22) und eine Vielzahl von ersten Verbindungseinheiten (23);
eine erste Nabe (24) auf einer ersten Seite der ersten Übertragungsverbindungsbasis (21) vorgesehen ist und ein Innenring der ersten Nabe (24) mit Innenzahnrädern versehen ist;
die erste Übertragungsstützbasis (22) durch die erste Nabe (24) einsetzend mit der ersten Übertragungsverbindungsbasis (21) zusammenpasst;
die Vielzahl von ersten Verbindungseinheiten (23) auf einer zusammenpassenden Fläche der ersten Übertragungsverbindungsbasis (21) und der ersten Übertragungsstützbasis (22) vorgesehen sind, um die erste Übertragungsverbindungsbasis (21) und die erste Übertragungsstützbasis (22) lösbar zu verbinden; und
die Vielzahl von zweiten Montagebasen A (60) gleichmäßig auf den Außenringen der ersten Übertragungsverbindungsbasis (21) und der ersten Übertragungsstützbasis (22) entlang der Umfangsrichtung verteilt sind.

12. Zahnstangenfahrzeug nach Anspruch 11, wobei jede der zweiten Montagebasen A (60) aufweist: eine erste Untermontagebasis A (61) und eine zweite Untermontagebasis A (62);
die ersten Untermontagebasen A (61) gleichmäßig auf dem Außenring der ersten Übertragungsverbindungsbasis (21) in Umfangsrichtung verteilt sind und nahe einer zweiten Seite der ersten Übertragungsverbindungsbasis (21) relativ zu der ersten Nabe (24) angeordnet sind; und
die Vielzahl von zweiten Untermontagebasen A (62) gleichmäßig auf dem Außenring der ersten Übertragungsstützbasis (22) in Umfangsrichtung verteilt sind und nahe einer ersten Seite der ersten Übertragungsstützbasis (22) entfernt von der ersten Übertragungsverbindungsbasis (21) angeordnet sind.

13. Zahnstangenfahrzeug nach einem der Ansprüche 10 bis 12, wobei jeder der ersten elastischen Abschnitte (30) aufweist: eine erste Montageplatte A (31), eine zweite Montageplatte A (32) und ein erstes Elastomer (33);
die erste Montageplatte A (31) und die zweite Montageplatte A (32) verbunden sind, um eine Montageanordnung zu bilden, die L-förmig ist;
zwei Montageanordnungen in Abständen angeordnet sind;
das erste Elastomer (33) zwischen den zwei Montageanordnungen angeordnet ist;
die erste Montageplatte A (31) mit den ersten Montagebasen A (50) oder den zweiten Montagebasen A (60) lösbar verbunden ist; und
die zweite Montageplatte A (32) mit dem ersten Elastomer (33) verbunden ist.

14. Zahnstangenfahrzeug nach Anspruch 6, ferner aufweisend eine Antriebsvorrichtung für das Zahnstangenfahrzeug;
wobei die Antriebsvorrichtung einen zweiten Antriebskasten (210), eine Stützhalterung (220), eine zweite Achshülse (250) und eine zweite Einstellanordnung (770) aufweist;
der zweite Antriebskasten (210) und die Stützhalterung (220) in Abständen angeordnet sind;
die Achse (110) zwischen dem zweiten Antriebskasten (210) und der Stützhalterung (220) vorgesehen ist;
die zweite Achshülse (250) außerhalb der Achse (110) aufgeschoben ist, die Stützhalterung (220) durchdringt und drehbar mit der Stützhalterung (220) zusammenpasst;
die Fahrantriebsräder (109) mit der zweiten Achshülse (250) innerhalb der Stützhalterung (220) verbunden sind und sich ein Teil der Fahrantriebsräder (109) aus der Stützhalterung (220) entlang der radialen Richtung der zweiten Achshülse (250) erstreckt, um mit einer auf dem Boden bereitgestellten Zahnstange in Eingriff zu stehen; und
die zweite Einstellanordnung (770) drehbar außerhalb der zweiten Achshülse (250) aufgeschoben ist und mit der Stützhalterung (220) verbunden ist, um die relative Position zwischen den Fahrantriebsrädern (109) und dem Radsatz (108) einzustellen;
wobei die zweite Einstellanordnung (770) aufweist: ein erstes Lager B (771), ein zweites Lager B (72) und ein drittes exzentrisches Rad (73);
das erste Lager B (771) und das zweite Lager B (72) in Abständen entlang der axialen Richtung der zweiten Achshülse (250) angeordnet sind;
das dritte exzentrische Rad (73) mit einem Innenring des ersten Lagers B (72) bzw. einem Außenring des zweiten Lagers B (72) zusammenpasst;
ein Außenring des ersten Lagers B (771) mit einem Innenring des Fahrantriebsrads zusammenpasst; und
ein Innenring des zweiten Lagers B (72) mit der zweiten Achshülse (250) zusammenpasst.

15. Zahnstangenfahrzeug nach Anspruch 14, wobei die zweite Einstellanordnung (770) ferner aufweist: eine zweite Einstellscheibe (74), wobei die zweite Einstellscheibe (74) mit dem dritten exzentrischen Rad (73) verbunden ist, um eine Lenkung des dritten exzentrischen Rads (73) durch die zweite Einstellscheibe (74) einzustellen.

16. Zahnstangenfahrzeug nach Anspruch 14, wobei die zwei zweiten Einstellanordnungen symmetrisch auf beiden Seiten des Fahrantriebsrads entlang der axialen Richtung der zweiten Achshülse (250) angeordnet sind.

17. Zahnstangenfahrzeug nach Anspruch 14, ferner aufweisend: eine zweite Bremsscheibe (880), einen zweiten Bremszylinder (881) und einen zweiten Bremssattel (882);
die zweite Bremsscheibe (880) mit der Achse (110) verbunden ist und zwischen der Stützhalterung (220) und den Radsätzen (108) angeordnet ist;
der zweite Bremszylinder (881) mit der Stützhalterung (220) verbunden ist;
der zweite Bremssattel (882) mit dem zweiten Bremszylinder (881) verbunden ist und entsprechend der zweiten Bremsscheibe (880) angeordnet ist; und
der zweite Bremszylinder (881) den zweiten Bremssattel (882) antreibt, um zu bewirken, dass der zweite Bremssattel (882) die zweite Bremsscheibe (880) festklemmt.

18. Zahnstangenfahrzeug nach einem der Ansprüche 14 bis 17, wobei das Fahrantriebsrad aufweist: einen zweiten gezahnten Ringabschnitt (661), einen zweiten Übertragungsabschnitt (662) und eine Vielzahl von zweiten elastischen Abschnitten (663);
wobei ein Außenring des zweiten gezahnten Ringabschnitts (661) mit zweiten äußeren Zahnradzähnen versehen ist und die zweiten äußeren Zahnradzähne mit der Zahnstange in Eingriff stehen;
wobei ein Außenring des zweiten Übertragungsabschnitts (662) mit einem Innenring des zweiten gezahnten Ringabschnitts (661) zusammenpasst und innere Ringzahnräder des zweiten Übertragungsabschnitts (662) mit einem zweiten Übertragungszahnrad (51) auf der zweiten Achshülse (250) in Eingriff stehen; und
die Vielzahl von zweiten elastischen Abschnitten (663) gleichmäßig auf der Seite des zweiten gezahnten Ringabschnitts (661) entlang der Umfangsrichtung verteilt sind und jeweils mit dem zweiten gezahnten Ringabschnitt (661) und dem zweiten Übertragungsabschnitt (662) verbunden sind.

## Revendications

1. Un bogie, comprenant :
un cadre de châssis (100), comportant une paire de poutres latérales (102), une paire de poutres transversales (104) et une paire de poutres d'extrémité (106), dans lequel les deux extrémités de la paire de poutres transversales (104) sont respectivement connectées entre la paire de poutres latérales (102), et la paire de poutres d'extrémité (106) sont respectivement connectées aux deux extrémités de la paire de poutres latérales (102) ;
deux jeux de roues (108), montées de manière rotative sur le cadre de châssis (100) par l'intermédiaire d'essieux (110) et respectivement localisées dans une zone entourée par les poutres d'extrémité (106), les poutres transversales (104) adjacentes aux poutres d'extrémité (106) et la paire de poutres latérales (102) ;
une paire d'engrenages de déplacement (109), respectivement montés sur l'essieu (110) par l'intermédiaire d'un dispositif excentrique et disposée le long d'un axe longitudinal du cadre de châssis (100) ; et
une paire de membres d'entraînement (112), respectivement montés sur les poutres transversales (104), et respectivement en liaison de transmission avec la paire d'engrenages de déplacement (109) par l'intermédiaire de dispositifs de transmission (111), dans lesquels les dispositifs de transmission (111) sont respectivement disposés sur des côtés opposés à la paire d'engrenages de déplacement (109) le long d'une direction transversale du cadre de châssis (100) ;
le dispositif excentrique comprend :
un premier palier de support (114), ayant une bague intérieure montée par emmanchement sur l'essieu (110) ;
une première roue excentrique (116), montée par emmanchement sur une bague extérieure du premier palier de support (114) et disposée de manière excentrique par rapport à l'essieu (110), dans laquelle une position de la première roue excentrique (116) par rapport au premier palier de support (114) est verrouillée par l'intermédiaire d'un mécanisme de verrouillage ; et
un deuxième palier de support (118), ayant une bague intérieure montée par emmanchement à l'extérieur de la première roue excentrique (116), dans lequel les engrenages de déplacement (109) manchonnent une bague extérieure du deuxième palier de support (118) ;
**caractérisé en ce que**,
le bogie comprend en outre un premier support de fixation (120) monté sur le cadre de châssis (100), des trous de fixation (122) pour fixer le premier palier de support (114) sont disposés sur le premier support de fixation (120) et une pluralité de premiers trous de positionnement (124) sont disposés sur une surface d'extrémité du trou de fixation (122) le long d'une direction circonférentielle du trou de fixation (122) ;
le mécanisme de verrouillage comprend
une bague de réglage (126), connectée à la circonférence extérieure de la première roue excentrique (116), dans laquelle une pluralité de deuxièmes trous de positionnement (128) sont disposés sur une surface d'extrémité de la bague de réglage (126), le long d'une direction circonférentielle de la bague de réglage (126) ; et
un membre de verrouillage (130), pénétrant à travers les premiers trous de positionnement (124) et les deuxièmes trous de positionnement (128) pour verrouiller une position de la première roue excentrique (116) par rapport au premier support de fixation (120).

2. Le bogie selon la revendication 1, dans lequel une première douille (132) est en outre emmanchée sur la circonférence extérieure de la première roue excentrique (116), et la première douille (132) est configurée pour réduire la friction entre une circonférence extérieure de la première roue excentrique (116) et une paroi intérieure du trou de fixation (122) ;
dans lequel le nombre de la première roue excentrique (116) est deux, et un bloc de synchronisation (134) est disposé entre les deux premières roues excentriques (116).

3. Le bogie selon la revendication 1 ou 2, comprenant en outre un dispositif d'amortissement secondaire, dans lequel le dispositif d'amortissement secondaire comprend une plaque de fond (136) connectée à un sommet des poutres latérales (102) et un ressort pneumatique (138) monté sur la plaque de fond (136), et le ressort pneumatique (138) est conique dans une direction partant de la plaque de fond (136) et s'éloignant des poutres latérales (102).

4. Le bogie selon la revendication 1 ou 2, comprenant en outre un dispositif anti-roulis monté sur chacune des poutres latérales (102),
dans lequel le dispositif anti-roulis comprend :
un logement de roulement (140), monté au fond de chacune des poutres latérales (102) ;
un arbre de barre de torsion (42), monté dans le logement de roulement (140) ; et
une barre de torsion anti-roulis (142), connectée entre l'arbre de barre de torsion et un corps de véhicule, dans lequel une structure d'articulation à rotule (144) est disposée à une extrémité de la barre de torsion anti-roulis (142) connectée au corps de véhicule.

5. Le bogie selon la revendication 1 ou 2, comprenant en outre un premier dispositif de freinage et un deuxième dispositif de freinage (150),
dans lequel le premier dispositif de freinage comprend :
un support de fixation (146), fixé sur les poutres latérales (102) ;
des mâchoires de frein (148), disposées sur le support de fixation (146) et à l'opposé d'une bande de roulement des jeux de roues (108) ;
le premier dispositif de freinage (150) comprend :
un disque de frein, disposé co- axialement avec chacun des jeux de roues (108) ;
deux bagues de friction, respectivement disposées sur des côtés opposés du jeu de roues, dans lequel une structure de dissipation de chaleur est disposée entre les deux bagues de friction ; et
un cylindre de frein, disposé sur la poutre latérale et entraînant le déplacement des deux bagues de friction par rapport au disque de frein.

6. Un véhicule à crémaillère, comprenant le bogie selon l'une quelconque des revendications 1 à 5.

7. Le véhicule à crémaillère de la revendication 6, comprenant en outre une structure d'engrenage de déplacement du véhicule à crémaillère ;
la structure d'engrenage de déplacement comprend une première partie de bague dentée (10), une première partie de transmission (20) et une pluralité de premières parties élastiques (30),
dans lequel une bague extérieure de la première partie de bague dentée (10) est disposée avec des premières dents d'engrenage extérieur (11), et les premières dents d'engrenage extérieur (11) s'engrènent avec une crémaillère disposée sur le sol ;
une bague extérieure de la première partie de transmission (20) est associée avec une bague intérieure de la première partie de bague dentée (10) ; et
la pluralité de premières parties élastiques (30) sont disposées de façon uniforme sur le côté de la première partie de bague dentée (10) le long de la direction circonférentielle, et sont respectivement connectées à la première partie de bague dentée (10) et à la première partie de transmission (20).

8. Le véhicule à crémaillère de la revendication 7, dans lequel la pluralité de premières parties élastiques (30) forment un assemblage élastique le long de la direction circonférentielle de la première partie de bague dentée (10) ; et
deux assemblages élastiques sont symétriquement disposés sur les deux côtés de la première partie de bague dentée (10) le long d'une direction axiale.

9. Le véhicule à crémaillère de la revendication 7, comprenant en outre : une deuxième douille (40), dans lequel la deuxième douille (40) est disposée entre la bague intérieure de la première partie de bague dentée (10) et la bague extérieure de la première partie de transmission (20) pour diminuer un coefficient de friction entre la première partie de bague dentée (10) et la première partie de transmission (20).

10. Le véhicule à crémaillère de la revendication 7, comprenant en outre :
une pluralité de premières bases de fixation A (50) et une pluralité de deuxièmes bases de fixation A (60) ;
les premières bases de fixation A (50) sont distribuées de manière uniforme sur le côté de la première partie de bague dentée (10) le long de la direction circonférentielle ;
les deuxièmes bases de fixation A (60) sont distribuées de manière uniforme sur la bague extérieure de la première partie de transmission (20) le long de la direction circonférentielle, et les premières bases de fixation A (50) et les deuxièmes bases de fixation A (60) sont disposées en quinconce ; et
les premières parties élastiques (30) sont connectées de façon détachable aux deuxièmes bases de fixation A (60) et aux premières bases de fixation A (50) adjacentes, respectivement.

11. Le véhicule à crémaillère de la revendication 10, dans lequel la première partie de transmission (20) comprend : une première base de connexion de transmission (21), une première base de support de transmission (22) et une pluralité de premières unités de connexion (23) ;
un premier bossage (24) est disposé sur un premier côté de la première base de connexion de transmission (21), et une bague intérieure du premier bossage (24) est diposée avec des engrenages de bague intérieure ;
la première base de support de transmission (22) est associée par insertion avec la première base de connexion de transmission (21) par l'intermédiaire du premier bossage (24) ;
la pluralité de premières unités de connexion (23) sont disposées sur une surface associée de la première base de connexion de transmission (21) et de la première base de support de transmission (22) pour connecter de manière détachable la première base de connexion de transmission (21) et de la première base de support de transmission (22) ; et
la pluralité de deuxièmes bases de fixation A (60) sont distribuées de manière uniforme sur les bagues extérieures de la première base de connexion de transmission (21) et de la première base de support de transmission (22) le long de la direction circonférentielle.

12. Le véhicule à crémaillère de la revendication 11, dans lequel chacune des deuxièmes bases de fixation A (60) comprend : une première base de sous-fixation A (61) et une deuxième base de sous-fixation A (62) ;
les premières bases de sous-fixation A (61) sont distribuées de manière uniforme et circonférentielle sur la bague extérieure de la première base de connexion de transmission (21), et sont disposées près d'un deuxième côté de la première base de connexion de transmission (21) par rapport au premier bossage (24) ; et
la pluralité de deuxième base de sous-fixation A (62) sont distribuées de manière uniforme et circonférentielle sur la bague extérieure de la première base de support de transmission (22), et sont disposées près d'un premier côté de la première base de support de transmission (22) loin de la première base de connexion de transmission (21).

13. Le véhicule à crémaillère selon l'une quelconque des revendications 10 à 12, dans lequel chacune des premières parties élastiques (30) comprend : une première plaque de fixation A (31), une deuxième plaque de fixation A (32) et un premier élastomère (33) ;
la première plaque de fixation A (31) et la deuxième plaque de fixation A (32) sont connectées pour former un assemblage de fixation qui est en forme de L ;
deux assemblages de fixation sont disposées à intervalles réguliers ;
le premier élastomère (33) est disposé entre les deux assemblages de fixation ;
la première plaque de fixation A (31) est connectée de façon détachable des premières bases de fixation A (50) ou des deuxièmes bases de fixation A (60) ; et
la deuxième plaque de fixation A (32) est connectée au premier élastomère (33).

14. Le véhicule à crémaillère de la revendication 6, comprenant en outre un dispositif d'entraînement pour le véhicule à crémaillère ;
dans lequel le dispositif d'entraînement comprend une deuxième boîte d'alimentation (210), un support de fixation (220), un deuxième manchon d'essieu (250), et un deuxième assemblage de réglage (770) ;
la deuxième boîte d'alimentation (210) et le support de fixation (220) sont disposés à intervalles réguliers ;
l'essieu (110) est disposé entre la deuxième boîte d'alimentation (210) et le support de fixation (220) ;
le deuxième manchon d'essieu (250) est emmanché à l'extérieur de l'essieu (110), pénètre à travers le support de fixation (220), et associé de manière rotative au support de fixation (220) ;
les engrenages de déplacement (109) sont connectés au deuxième manchon d'essieu (250) à l'intérieur du support de fixation (220), et une part des engrenages de déplacement (109) s'étend en-dehors du support de fixation (220) le long de la direction radiale du deuxième manchon d'essieu (250) pour s'engrener avec une crémaillère disposée sur le sol ; et
le deuxième assemblage de réglage (770) est emmanché de manière rotative à l'extérieur du deuxième manchon d'essieu (250) et est connecté avec le support de fixation (220) pour régler la position relative entre les engrenages de déplacement (109) et le jeu de roues (108) ;
dans lequel le deuxième assemblage de réglage (770) comprend : un premier roulement B (771), un deuxième roulement B (72) et une troisième roue excentrique (73) ;
le premier roulement B (771) et le deuxième roulement B (72) sont disposés à intervalles réguliers le long de la direction axiale du deuxième manchon d'essieu (250) ;
la troisième roue excentrique (73) est associée avec une bague intérieure du premier roulement B (72) et une bague extérieure du deuxième roulement B (72), respectivement ;
une bague extérieure du premier roulement B (771) est associée avec une bague intérieure de l'engrenage de déplacement ; et
une bague intérieure du deuxième roulement B (72) est associée avec le deuxième manchon d'essieu (250).

15. Le véhicule à crémaillère de la revendication 14, dans lequel le deuxième assemblage de réglage (770) comprend en outre : un deuxième disque de réglage (74), le deuxième disque de réglage (74) est connecté à la troisième roue excentrique (73) pour régler une direction de la troisième roue excentrique (73) par l'intermédiaire du deuxième disque de réglage (74).

16. Le véhicule à crémaillère de la revendication 14, dans lequel les deux deuxièmes assemblages de réglage sont disposés symétriquement sur les deux côtés de l'engrenage de déplacement le long de la direction axiale du deuxième manchon d'essieu (250).

17. Le véhicule à crémaillère de la revendication 14, comprenant en outre un deuxième disque de frein (880), un deuxième cylindre de frein (881) et un deuxième étrier de frein (882) ;
le deuxième disque de frein (880) est connecté à l'essieu (110) et est disposé entre le support de fixation (220) et les jeux de roues (108) ;
le deuxième cylindre de frein (881) est connecté au support de fixation (220) ;
le deuxième étrier de frein (882) est connecté au deuxième cylindre de frein (881) et est disposé de façon correspondante au deuxième disque de frein (880) ; et
le deuxième cylindre de frein (881) entraîne le deuxième étrier de frein (882) pour faire en sorte que le deuxième étrier de frein (882) serre le deuxième disque de frein (880).

18. Le véhicule à crémaillère selon l'une quelconque des revendications 14 à 17, dans lequel l'engrenage de déplacement comprend : une deuxième partie de bague dentée (661), une deuxième partie de transmission (662) et une pluralité de deuxièmes parties élastiques (663) ;
une bague extérieure de la deuxième partie de bague dentée (661) est disposée avec des deuxièmes dents d'engrenage extérieur, et les deuxièmes dents d'engrenage extérieur s'engrènent avec la crémaillère ;
une bague extérieure de la deuxième partie de transmission (662) est associée avec une bague intérieure de la deuxième partie de bague dentée (661), et des engrenages de bague intérieure de la deuxième partie de transmission (662) sont engrenés avec un deuxième engrenage de transmission sur le deuxième manchon d'essieu (250) ; et
la pluralité de deuxièmes parties élastiques (663) sont distribuées de façon uniforme sur le côté de la deuxième partie de bague dentée (661) le long de la direction circonférentielle, et sont respectivement connectées à la deuxième partie de bague dentée (661) et à la deuxième partie de transmission (662).
